# EUROPEAN PATENT APPLICATION

(11) **EP 4 622 173 A1**
(43) Date of publication of application: **24.09.2025**
(21) Application number: 23937017.4
(22) Date of filing: 17.05.2023
(51) Int. Cl.: H04L 9/40

(54) **SECURITY ENTRY MAINTENANCE METHOD AND APPARATUS, AND NETWORK DEVICE AND STORAGE MEDIUM**

(71) Applicant: New H3C Technologies Co., Ltd., Hangzhou, Zhejiang 310052 (CN)
(72) Inventor: YE, Jinrong, Beijing 100102 (CN)
(74) Representative: IPAZ
(86) International application number: PCT/CN2023/094804
(87) International publication number: WO 2024/234334

(57) **Abstract**

The embodiments of the present application relate to the technical field of communications. Provided are a security entry maintenance method and apparatus, and a network device and a storage medium. The method comprises: when a protocol connection with a second network device is interrupted, acquiring a valid lifetime value, which is comprised in each remote MAC-IP entry, wherein the valid lifetime value is used for indicating a valid lifetime of an IP address, which is comprised in the remote MAC-IP entry; and in response to determining that the interruption duration of the protocol connection reaches the valid lifetime value, deleting at least one remote MAC-IP entry. In this way, illegitimate messages can be prevented from entering a network, and the wasting of resources is avoided, thereby improving the network security.

## Description

### Technical Field

The present disclosure relates to the technical field of communications, in particular to a method and an apparatus for security table entry maintenance, network device, and storage medium.

### Background

In order to improve the network security, a source address security check mechanism can be deployed on an access device. The access device can perform a legitimacy check on received packets based on Media Access Control address-Internet Protocol address (MAC-IP) table entries, thereby avoiding the passing of illegal packets.

After generating MAC-IP table entries for the terminal, an access device 1 can notify the MAC-IP table entries to an aggregation device through a protocol connection, and then the aggregation device can notify the MAC-IP table entries to other access devices. In this way, after the terminal moves from an Access Point (AP) attached to the access device 1 to an AP attached to an access device 2, the access device 2 can perform a legitimacy check on the terminal based on the MAC-IP table entries.

If the access device 2 is only connected to one aggregation device, when the protocol connection between the access device 2 and the aggregation device is disconnected, the access device 2 can delete the MAC-IP table entries from this protocol connection. In this case, if the source address security check mechanism is enabled, the access device 2 cannot perform the legitimacy check based on the MAC-IP table entries, resulting in the drop of legal packets; if the source address security check mechanism is not enabled, then the illegal packets can also enter the network, resulting in the decreasing of the network security.

If the access device 2 does not delete the MAC-IP table entries from this protocol connection, and if the subsequent protocol connection is not restored, it will cause the MAC-IP table entries to occupy hardware resources for a long time, causing resource waste. Therefore, in the case of the protocol connection is disconnected, how to maintain MAC-IP table entries is an urgent problem that needs to be solved.

### Summary

The examples of the present disclosure aim at providing a method and an apparatus for security table entry maintenance, network device, and storage medium, which can avoid resource waste and drop of legal packets. The specific technical solution is as follows:
In a first aspect, an example of the present disclosure provides a method for security table entry maintenance, which is applied to a first network device, the first network device including a remote MAC-IP table, the remote MAC-IP table including at least one remote MAC-IP table entry notified by a second network device, wherein the method comprises:
acquiring, in response to determining that a protocol connection between the first network device and the second network device is disconnected, a valid lifetime value included in each remote MAC-IP table entry, the valid lifetime value is used to indicate a valid lifetime of an IP address included in the remote MAC-IP table entry;
deleting, in response to determining that a duration during which the protocol connection is disconnected reaches the valid lifetime value, the at least one remote MAC-IP table entry.

In a possible example, the method further comprises:
establishing, in response to determining that the first network device generates a DHCP relay table entry, a local MAC-IP table entry based on the DHCP relay table entry, and issuing a forwarding MAC-IP table entry corresponding to the local MAC-IP table entry to hardware resources, the local MAC-IP table entry includes a first valid lifetime value of a first IP address;
sending a first MAC-IP notification message to a third network device to enable the third network device to establish a first remote MAC-IP table entry;
wherein, the first MAC-IP notification message includes a first sequence number and the first valid lifetime value, and the first remote MAC-IP table entry includes the first sequence number and the first valid lifetime value;
the first sequence number is a sum of 1 and a maximum sequence number in a remote MAC-IP table entry or remote MAC-IP table entries that matches/match the local MAC-IP table entry.

In a possible example, after issuing a forwarding MAC-IP table entry corresponding to the local MAC-IP table entry to hardware resources, the method further comprises:
deleting, in response to determining that an access table entry that matches the local MAC-IP table entry is deleted, the forwarding MAC-IP table entry.

**In** a possible example, in response to determining that a protocol connection between the first network device and the second network device is disconnected, a valid lifetime value included in each remote MAC-IP table entry, the method further comprises:
receiving a second MAC-IP notification message sent by the second network device, wherein the second MAC-IP notification message includes a second valid lifetime value of a second IP address and a second sequence number;
establishing a second remote MAC-IP table entry, which includes the second valid lifetime value and the second sequence number.

**In** a possible example, the first network device includes a local MAC-IP table, the local MAC-IP table includes at least one local MAC-IP table entry;
after establishing the second remote MAC-IP table entry, the method further comprises:
receiving a first packet sent by a terminal, the first packet includes a MAC address and an IP address of the terminal;

in response to determining that there is no local MAC-IP table entry in the local MAC-IP table which matches the MAC address and the IP address of the terminal, and the MAC address and the IP address of the terminal match the second remote MAC-IP table entry, performing access detection on the terminal;
generating, in response to determining that an access response sent by the terminal is received, a synthetic MAC-IP table entry, which includes a port identifier, a VLAN identifier, the MAC address and the IP address of the terminal;
generating a forwarding MAC-IP table entry based on the synthetic MAC-IP table entry, the forwarding MAC-IP table entry includes the MAC address and IP address of the terminal;
issuing the forwarding MAC-IP table entry to hardware resources.

In a possible example, after issuing the forwarding MAC-IP table entry to the hardware resources, the method further comprises:
deleting, in response to determining that an access table entry of the terminal is deleted, the synthetic MAC-IP table entry and the forwarding MAC-IP table entry.

In a possible example, the first network device includes a local MAC-IP table, the local MAC-IP table includes a first local MAC-IP table entry, and the first local MAC-IP table entry includes a third sequence number; after establishing the second remote MAC-IP table entry, the method further comprises:
in response to determining that the second remote MAC-IP table entry matches the first local MAC-IP table entry, and the second sequence number is greater than the third sequence number, then deleting the first local MAC-IP table entry, and deleting a DHCP relay table entry corresponding to the first local MAC-IP table entry.

In a possible example, the MAC-IP notification message sent by the first network device includes a first extended community attribute, and the first extended community attribute includes a valid lifetime value of an IP address.

In a possible example, the MAC-IP notification message sent by the first network device further includes a second extended community attribute, which includes a sequence number of a MAC-IP table entry.

In a second aspect, an example of the present disclosure provides a method for security table entry maintenance, which is applied to a second network device, the second network device including a first remote MAC-IP table, the first remote MAC-IP table including at least one remote MAC-IP table entry notified by a fourth network device, wherein the method comprises:
acquiring, in response to determining that a protocol connection between the second network device and the fourth network device is disconnected, a valid lifetime value included in each remote MAC-IP table entry, wherein the valid lifetime value is used to indicate a valid lifetime of an IP address included in the remote MAC-IP table entry;
deleting, in response to determining that a duration during which the protocol connection is disconnected reaches the valid lifetime value, the at least one remote MAC-IP table entry.

In a possible example, before acquiring, in response to determining that a protocol connection between the second network device and the fourth network device is disconnected, a valid lifetime value included in each remote MAC-IP table entry, the method further comprises:
receiving a first MAC-IP notification message sent by the fourth network device, wherein the first MAC-IP notification message includes a first valid lifetime value of a first IP address and a first sequence number;
establishing a first remote MAC-IP table entry, which includes the first valid lifetime value and the first sequence number.

In a possible example, the second network device further includes at least one second remote MAC-IP table, the at least one second remote MAC-IP table includes a second remote MAC-IP table entry, the second remote MAC-IP table entry matches the first remote MAC-IP table entry, and the second remote MAC-IP table entry includes a second sequence number; after establishing the first remote MAC-IP table entry, the method further comprises:
sending, in response to determining that the first sequence number is greater than the second sequence number, a second MAC-IP notification message to network devices other than the fourth network device, and the second MAC-IP notification message includes the first valid lifetime value and the first sequence number.

In a possible example, the second remote device further includes at least one third remote MAC-IP table, each third remote MAC-IP table includes at least one remote MAC-IP table entry; after deleting the at least one remote MAC-IP table entry, the method further comprises:
for each deleted remote MAC-IP table entry, in response to determining that there is no remote MAC-IP table entry in the at least one third remote MAC-IP table which matches this deleted remote MAC-IP table entry, sending a first MAC-IP revocation message to other network devices other than the fourth network device, wherein the first MAC-IP revocation message comprises a MAC address and an IP address in the remote MAC-IP table entry; or,
for each deleted remote MAC-IP table entry, in response to determining that there are remote MAC-IP table entries in the at least one third remote MAC-IP table that match this deleted remote MAC-IP table entry, selecting a third remote MAC-IP table entry with a highest sequence number from the matched remote MAC-IP table entries, wherein the third remote MAC-IP table entry comprises a second valid lifetime value and a third sequence number; and sending a third MAC-IP notification message to other network devices other than a fifth network device, wherein the third MAC-IP notification message comprises the second valid lifetime value and the third sequence number, and the fifth network device is a source device of the third remote MAC-IP table entry.

In a possible example, the MAC-IP notification message sent by the second network device includes a first extended community attribute, and the first extended community attribute includes a valid lifetime value of an IP address.

In a possible example, the MAC-IP notification message sent by the second network device further includes a second extended community attribute, which includes a sequence number of a MAC-IP table entry.

In a third aspect, an example of the present disclosure provides an apparatus for security table entry maintenance, which is applied to a first network device, the first network device including a remote MAC-IP table, the remote MAC-IP table including at least one remote MAC-IP table entry notified by a second network device, and the apparatus comprises:
an acquisition module, to acquire, in response to determining that a protocol connection between the first network device and the second network device is disconnected, a valid lifetime value included in each remote MAC-IP table entry, the valid lifetime value is used to indicate a valid lifetime of an IP address included in the remote MAC-IP table entry;
a deletion module, to delete, in response to determining that a duration during which the protocol connection is disconnected reaches the valid lifetime value, the at least one remote MAC-IP table entry.

In a possible example, the apparatus further comprises:
an establishing module, to establish, in response to determining that the first network device generates a DHCP relay table entry, a local MAC-IP table entry based on the DHCP relay table entry, and issue a forwarding MAC-IP table entry corresponding to the local MAC-IP table entry to hardware resources, the local MAC-IP table entry includes a first valid lifetime value of a first IP address;
a sending module, to send a first MAC-IP notification message to a third network device to enable the third network device to establish a first remote MAC-IP table entry;
wherein, the first MAC-IP notification message includes a first sequence number and the first valid lifetime value, and the first remote MAC-IP table entry includes the first sequence number and the first valid lifetime value;
the first sequence number is a sum of 1 and a maximum sequence number in a remote MAC-IP table entry or remote MAC-IP table entries that matches/match the local MAC-IP table entry.

In a possible example, the deletion module is further to delete, in response to determining that an access table entry that matches the local MAC-IP table entry is deleted, the forwarding MAC-IP table entry.

In a possible example, the apparatus further comprises:
a receiving module, to receive a second MAC-IP notification message sent by the second network device, the second MAC-IP notification message includes a second valid lifetime value of a second IP address and a second sequence number;
an establishing module, to establish a second remote MAC-IP table entry, which includes the second valid lifetime value and the second sequence number.

In a possible example, the first network device includes a local MAC-IP table, the local MAC-IP table includes at least one local MAC-IP table entry;
the apparatus further includes a detection module, a generation module and an issuing module;
the receiving module is further to receive a first packet sent by a terminal, the first packet includes a MAC address and an IP address of the terminal;
the detection module is to perform access detection on the terminal, in response to determining that there is no local MAC-IP table entry in the local MAC-IP table which matches the MAC address and the IP address of the terminal, and the MAC address and the IP address of the terminal match the second remote MAC-IP table entry;
the generation module is to generate, in response to determining that an access response sent by the terminal is received, a synthetic MAC-IP table entry, which includes a port identifier, a VLAN identifier, the MAC address and the IP address of the terminal;
the generation module is further to generate a forwarding MAC-IP table entry based on the synthetic MAC-IP table entry, the forwarding MAC-IP table entry includes the MAC address and IP address of the terminal;
the issuing module is to issue the forwarding MAC-IP table entry to hardware resources.

In a possible example, the deletion module, is further to delete, in response to determining that an access table entry of the terminal is deleted, the synthetic MAC-IP table entry and the forwarding MAC-IP table entry.

In a possible example, the first network device includes a local MAC-IP table, the local MAC-IP table includes a first local MAC-IP entry, the first local MAC-IP entry includes a third sequence number;
the deletion module is further to delete, in response to determining that the second remote MAC-IP table entry matches the first local MAC-IP table entry, and the second sequence number is greater than the third sequence number, the first local MAC-IP table entry, and delete a DHCP relay table entry corresponding to the first local MAC-IP table entry.

In a possible example, the MAC-IP notification message sent by the first network device includes a first extended community attribute, and the first extended community attribute includes a valid lifetime value of the IP address.

In a possible example, the MAC-IP notification message sent by the first network device further includes a second extended community attribute, which includes a sequence number of a MAC-IP table entry.

In a fourth aspect, an example of the present disclosure provides an apparatus for security table entry maintenance, which is applied to a second network device, the second network device including a first remote MAC-IP table, the first remote MAC-IP table including at least one remote MAC-IP table entry notified by a fourth network device, wherein the apparatus comprises:
an acquisition module, to acquire, in response to determining that a protocol connection between the second network device and the fourth network device is disconnected, a valid lifetime value included in each remote MAC-IP table entry, the valid lifetime value is used to indicate a valid lifetime of an IP address included in the remote MAC-IP table entry;
a deletion module, to delete, in response to determining that a duration during which the protocol connection is disconnected reaches the valid lifetime value, the at least one remote MAC-IP table entry.

In a possible example, the apparatus further comprises:
a receiving module, to receive a first MAC-IP notification message sent by the fourth network device, the first MAC-IP notification message includes a first valid lifetime value of a first IP address and a first sequence number;
an establishing module, to establish a first remote MAC-IP table entry, which includes the first valid lifetime value and the first sequence number.

In a possible example, the second network device further includes at least one second remote MAC-IP table, the at least one second remote MAC-IP table includes a second remote MAC-IP table entry, the second remote MAC-IP table entry matches the first remote MAC-IP table entry, and the second remote MAC-IP table entry includes a second sequence number; the apparatus further comprises:
a sending module, to send, in response to determining that the first sequence number is greater than the second sequence number, a second MAC-IP notification message to other network devices other than the fourth network device, and the second MAC-IP notification message includes the first valid lifetime value and the first sequence number.

In a possible example, the second remote device further includes at least one third remote MAC-IP table, each third remote MAC-IP table includes at least one remote MAC-IP table entry; the apparatus further comprises a sending module;
the sending module is to:
for each deleted remote MAC-IP table entry, in response to determining that there is no remote MAC-IP table entry in the at least one third remote MAC-IP table which matches this deleted remote MAC-IP table entry, send a first MAC-IP revocation message to other network devices other than the fourth network device, wherein the first MAC-IP revocation message includes a MAC address and an IP address in the remote MAC-IP table entry; or,
for each deleted remote MAC-IP table entry, in response to determining that there are remote MAC-IP table entries in the at least one third remote MAC-IP table which match this deleted remote MAC-IP table entry, select a third remote MAC-IP table entry with a highest sequence number from the matched remote MAC-IP table entries, wherein the third remote MAC-IP table entry includes a second valid lifetime value and a third sequence number; send a third MAC-IP notification message to other network devices other than a fifth network device, wherein the third MAC-IP notification message includes the second valid lifetime value and the third sequence number, and the fifth network device is a source device of the third remote MAC-IP table entry.

In a possible example, the MAC-IP notification message sent by the second network device includes a first extended community attribute, and the first extended community attribute includes a valid lifetime value of an IP address.

In a possible example, the MAC-IP notification message sent by the second network device further includes a second extended community attribute, which includes a sequence number of a MAC-IP table entry.

In a fifth aspect, an example of the present disclosure provides a first network device, wherein the first network device includes a remote MAC-IP table, the remote MAC-IP table includes at least one remote MAC-IP table entry notified by the second network device, and the first network device comprises:
a processor;
a transceiver;
a machine storage medium having stored therein machine executable instructions which, when being executed by a processor, cause the processor to perform the following operations:
   acquiring, in response to determining that a protocol connection between the first network device and the second network device is disconnected, a valid lifetime value included in each remote MAC-IP table entry, the valid lifetime value is used to indicate a valid lifetime of an IP address included in the remote MAC-IP table entry;
   deleting, in response to determining that a duration during which the protocol connection is disconnected reaches the valid lifetime value, the at least one remote MAC-IP table entry.

In a possible example, the machine executable instructions cause the processor to perform the following operations:
establishing, in response to determining that the first network device generates a DHCP relay table entry, a local MAC-IP table entry based on the DHCP relay table entry, and issuing a forwarding MAC-IP table entry corresponding to the local MAC-IP table entry to hardware resources, the local MAC-IP table entry includes a first valid lifetime value of a first IP address;
sending via the transceiver, a first MAC-IP notification message to a third network device to enable the third network device to establish a first remote MAC-IP table entry;
wherein, the first MAC-IP notification message includes a first sequence number and the first valid lifetime value, and the first remote MAC-IP table entry includes the first sequence number and the first valid lifetime value;
the first sequence number is a sum of 1 and a maximum sequence number in a remote MAC-IP table entry or remote MAC-IP table entries that matches/match the local MAC-IP table entry.

**In** a possible example, the machine executable instructions cause the processor to perform the following operations:
deleting, in response to determining that an access table entry that matches the local MAC-IP table entry is deleted, the forwarding MAC-IP table entry.

**In** a possible example, the machine executable instructions cause the processor to perform the following operations:
receiving via the transceiver, a second MAC-IP notification message sent by the second network device, the second MAC-IP notification message includes a second valid lifetime value of a second IP address and a second sequence number;
establishing a second remote MAC-IP table entry, which includes the second valid lifetime value and the second sequence number.

**In** a possible example, the first network device includes a local MAC-IP table, the local MAC-IP table includes at least one local MAC-IP table entry;
the machine executable instructions cause the processor to perform the following operations:
receiving via the transceiver, a first packet sent by a terminal, the first packet includes a MAC address and an IP address of the terminal;

in response to determining that there is no local MAC-IP table entry in the local MAC-IP table that matches the MAC address and IP address of the terminal, and the MAC address and IP address of the terminal match the second remote MAC-IP table entry, performing access detection on the terminal;
generating, in response to determining that an access response sent by the terminal is received, a synthetic MAC-IP table entry, which includes a port identifier, a VLAN identifier, the MAC address and the IP address of the terminal;
generating a forwarding MAC-IP table entry based on the synthetic MAC-IP table entry, the forwarding MAC-IP table entry includes the MAC address and IP address of the terminal;
issuing the forwarding MAC-IP table entry to hardware resources.

**In** a possible example, the machine executable instructions cause the processor to perform the following operations:
deleting, in response to determining that the access table entry of the terminal is deleted, the synthetic MAC-IP table entry and the forwarding MAC-IP table entry.

In a possible example, the first network device includes a local MAC-IP table, the local MAC-IP table includes a first local MAC-IP table entry, and the first local MAC-IP table entry includes a third sequence number; the machine executable instructions further cause the processor to perform the following operations:
in response to determining that the second remote MAC-IP table entry matches the first local MAC-IP table entry, and the second sequence number is greater than the third sequence number, deleting the first local MAC-IP table entry, and deleting the DHCP relay table entry corresponding to the first local MAC-IP table entry.

In a possible example, the MAC-IP notification message sent by the first network device includes a first extended community attribute, and the first extended community attribute includes a valid lifetime value of an IP address.

In a possible example, the MAC-IP notification message sent by the first network device further includes a second extended community attribute, which includes a sequence number of a MAC-IP table entry.

In a sixth aspect, an example of the present disclosure provides a second network device, wherein the second network device includes a first remote MAC-IP table, the first remote MAC-IP table includes at least one remote MAC-IP table entry notified by a fourth network device, and the second network device comprises:
a processor;
a transceiver;
a machine storage medium having stored therein machine executable instructions which, when being executed by a processor, cause the processor to perform the following operations:
   acquiring, in response to determining that a protocol connection between the second network device and the fourth network device is disconnected, a valid lifetime value included in each remote MAC-IP table entry, the valid lifetime value is used to indicate a valid lifetime of an IP address included in the remote MAC-IP table entry;
   deleting, in response to determining that a duration during which the protocol connection is disconnected reaches the valid lifetime value, the at least one remote MAC-IP table entry.

In a possible example, the machine executable instructions cause the processor to perform the following operations:
receiving via the transceiver, a first MAC-IP notification message sent by the fourth network device, wherein the first MAC-IP notification message includes a first valid lifetime value of a first IP address and a first sequence number;
establishing a first remote MAC-IP table entry, which includes the first valid lifetime value and the first sequence number.

In a possible example, the second network device further includes at least one second remote MAC-IP table, the at least one second remote MAC-IP table includes a second remote MAC-IP table entry, the second remote MAC-IP table entry matches the first remote MAC-IP table entry, and the second remote MAC-IP table entry includes a second sequence number; the machine executable instructions cause the processor to perform the following operation:
sending, in response to determining that the first sequence number is greater than the second sequence number, a second MAC-IP notification message to other network devices other than the fourth network device, and the second MAC-IP notification message includes the first valid lifetime value and the first sequence number.

In a possible example, the second remote device further includes at least one third remote MAC-IP table, each third remote MAC-IP table includes at least one remote MAC-IP table entry; the machine executable instructions cause the processor to perform the following operations:
for each deleted remote MAC-IP table entry, in response to determining that there is no remote MAC-IP table entry in the at least one third remote MAC-IP table which matches this deleted remote MAC-IP table entry, sending a first MAC-IP revocation message to other network devices other than the fourth network device, the first MAC-IP revocation message includes a MAC address and an IP address in the remote MAC-IP table entry; or,
for each deleted remote MAC-IP table entry, in response to determining that there are remote MAC-IP table entries in the at least one third remote MAC-IP table which match this deleted remote MAC-IP table entry, selecting a third remote MAC-IP table entry with a highest sequence number from the matched remote MAC-IP table entries, the third remote MAC-IP table entry includes a second valid lifetime value and a third sequence number; sending a third MAC-IP notification message to other network devices other than a fifth network device, the third MAC-IP notification message includes the second valid lifetime value and the third sequence number, and the fifth network device is a source device of the third remote MAC-IP table entry.

In a possible example, the MAC-IP notification message sent by the second network device includes a first extended community attribute, and the first extended community attribute includes a valid lifetime value of an IP address.

In a possible example, the MAC-IP notification message sent by the second network device further includes a second extended community attribute, which includes a sequence number of a MAC-IP table entry.

In a seventh aspect, an example of the present disclosure provides a machine readable storage medium having stored therein machine executable instructions that, when invoked and executed by a processor, cause the processor to implement the method of the first aspect or the second aspect.

In an eighth aspect, an example of the present disclosure provides a computer program product, which causes a processor to perform the method of the first aspect or the second aspect.

Using the above technical solution, the remote MAC-IP table entry in the first network device includes a valid lifetime value, the valid lifetime value is used to indicate a valid lifetime value of an IP address included in the remote MAC-IP table entry. If a duration during which the protocol connection is disconnected reaches the valid lifetime value, it indicates that the IP address included in the MAC-IP table entry is no longer valid. That is, the terminal that originally applied for the IP address is no longer able to use the IP address, deleting the remote MAC-IP table entry will not affect subsequent legitimacy verification of the terminal, will not affect the network security, and can prevent the remote MAC-IP table entry from continuing to occupy the resources of the first network device. Before the duration during which the protocol connection is disconnected reaches the valid lifetime value, the first network device will not delete the remote MAC-IP table entry. Therefore, in the case that the source address security check mechanism is enabled, it will not cause the drop of legal packets matching the remote MAC-IP table entry, and can prevent illegal packets from entering the network, which can improve the network security.

### Brief Description of the Drawings

The drawings described herein are used to provide further understanding of the present disclosure, and form a part of the present disclosure. The schematic examples and description herein are used to explain the present disclosure and do not constitute improper limitations to the present disclosure.
FIG. 1 is a schematic structural diagram of a Spine-Leaf network architecture according to an example of the present disclosure;
FIG. 2 is a flow diagram of a method for security table entry maintenance according to an example of the present disclosure;
FIG. 3 is an exemplary schematic diagram of a MAC-IP NLRI format according to an example of the present disclosure;
FIG. 4 is an exemplary schematic diagram of a Route Type format according to an example of the present disclosure;
FIG. 5 is an exemplary schematic diagram of a first extended community attribute format according to an example of the present disclosure;
FIG. 6 is an exemplary schematic diagram of a second extended community attribute format according to an example of the present disclosure;
FIG. 7 is a flow diagram of another method for security table entry maintenance according to an example of the present disclosure;
FIG. 8 is a schematic structural diagram of another Spine-Leaf network architecture according to an example of the present disclosure;
FIG. 9 is a schematic structural diagram of yet another Spine-Leaf network architecture according to an example of the present disclosure;
FIG. 10 is a schematic structural diagram of yet another Spine-Leaf network architecture according to an example of the present disclosure;
FIG. 11 is a schematic structural diagram of an apparatus for security table entry maintenance according to an example of the present disclosure;
FIG. 12 is a schematic structural diagram of another apparatus for security table entry maintenance according to an example of the present disclosure;
FIG. 13 is a schematic structural diagram of a first network device according to an example of the present disclosure;
FIG. 14 is a schematic structural diagram of a second network device according to an example of the present disclosure.

### Detailed Description

In order to make objectives, technical solutions and advantages of the present disclosure more apparent, the present disclosure now will be described in detail with reference to the accompanying drawings and the detailed description. Obviously, the examples described are only some of the examples of the present disclosure instead of all the examples. All other examples obtained by those of ordinary skill in the art based on the examples of the disclosure without any creative efforts are within the scope of the disclosure.

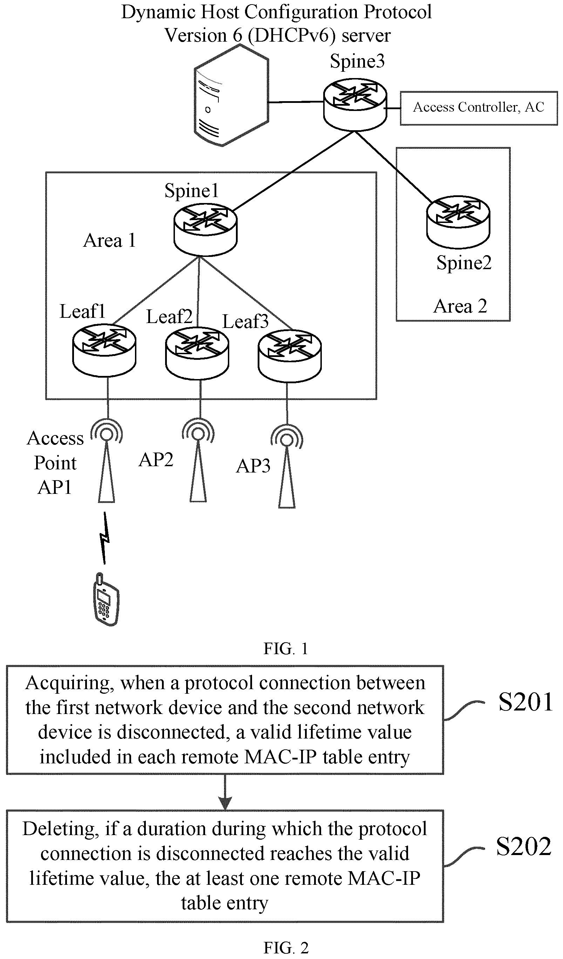

The network architecture applied in the examples of the present disclosure can be a Spine-Leaf network architecture, as shown in FIG. 1. The network architecture includes two levels of aggregation devices, wherein Spine3 is an upper level aggregation device of Spine1 in Zone 1 and Spine2 in Zone 2.

Spine3 is connected to an Access Controller (AC) and a Dynamic Host Configuration Protocol Version 6 (DHCPv6) server, and the DHCPv6 server is used to assign Internet Protocol Version 6 (IPv6) addresses to terminals.

Spine1 is located in Area 1, which further includes three access devices, namely Leaf1, Leaf2 and Leaf3. Leaf1, Leaf2 and Leaf3 are all connected to Spine1.

AP1 is connected to Leaf1, AP2 is connected to Leaf2, and AP3 is connected to Leaf3. The terminal can communicate with the AP, FIG. 1 is an example of terminal access to AP1.

It should be noted that the number of devices in FIG. 1 is only an example, and in actual implementation, the number of devices in FIG. 1 is not limited to this.

There is a security check mechanism deployed on the access device, the security check mechanism includes a control plane check mechanism and a data plane check mechanism.

Wherein the control plane check mechanism refers to the legitimacy check of the received protocol packet, such as filtering the Media Access Control (MAC) address and Internet Protocol (IP) address of the sender of neighbor discovery (ND) and Address Resolution Protocol (ARP) detection packets to prevent the generation of illegal ND table entries and ARP table entries.

The data plane check mechanism refers to filtering and controlling the source MAC address and source IP address of received business packets to prevent illegal business packets from passing through.

The control plane check mechanism and data plane check mechanism both rely on pre-generated MAC-IP table entries. Currently, the methods for dynamically generating MAC-IP table entries include generating MAC-IP table entries based on Dynamic Host Configuration Protocol (DHCP) relay table entries and generating MAC-IP table entries through DHCP snooping. The examples of the present disclosure do not limit the method of generating local security table entries for the access device.

It should be noted that if the user sets an IP address for the terminal without authorization, it will not trigger the access device to generate MAC-IP table entries, and the access device will discard packets from the terminal.

The IP address in the examples of the present disclosure can be an Internet Protocol Version 4 (IPv4) address or an IPv6 address.

An example of the present disclosure provides a method for security table entry maintenance applied to a first network device, which can be an access device, such as a Leaf device in the Spine-Leaf structure. The first network device includes a remote MAC-IP table, which includes at least one remote MAC-IP table entry notified by a second network device. As shown in FIG. 2, this method includes:
S201, acquiring, when a protocol connection between the first network device and the second network device is disconnected, a valid lifetime value included in each remote MAC-IP table entry.

Wherein the valid lifetime value is used to indicate a valid lifetime of an IP addresses included in the remote MAC-IP table entry.

The second network device can be an aggregation device. Taking the network architecture shown in FIG. 1 as an example, the first network device can be Leaf1, Leaf2, or Leaf3 as shown in FIG. 1, and the second network device can be Spine1. The protocol connection between the first network device and the second network device can be a Border Gateway Protocol (BGP) connection. Alternatively, the protocol connection between the first network device and the second network device can also be a customized private protocol connection. In the case where the protocol connection is a private protocol connection, each network device notifies MAC-IP table entries through a private protocol.

S202, deleting, if a duration during which the protocol connection is disconnected reaches the valid lifetime value, the at least one remote MAC-IP table entry.

It can be understood that in the case where the remote MAC-IP table includes one MAC-IP table entry, the first network device can acquire the valid lifetime value included in the MAC-IP table entry. The first network device takes a moment wherein the protocol connection is disconnected as a starting moment, and maintains the valid lifetime value of the remote MAC-IP table entry. That is, after detecting the disconnection of the protocol connection, the first network device maintains the valid lifetime value of the remote MAC-IP table entry, and will not delete the remote MAC-IP table entry until the valid lifetime value is reached.

If the protocol connection has not been restored when the duration from the start moment reaches the valid lifetime value, the remote MAC-IP table entry will be deleted.

For example, if the valid lifetime value is 100000 seconds, the first network device starts timing after detecting the disconnection of the protocol connection, and maintains the remote MAC-IP table entry for 100000 seconds. If the protocol connection has not been restored after 100000 seconds, then the first network device will delete the remote MAC-IP table entry.

In the case where the remote MAC-IP table includes multiple MAC-IP table entries, the first network device can acquire the valid lifetime values of multiple remote MAC-IP table entries.

In one example, after the duration of disconnection of the protocol connection reaches all valid lifetime values acquired, that is, after the duration of the disconnection of the protocol connection reaches a maximum lifetime value among the acquired valid lifetime values, the remote MAC-IP table, including multiple MAC-IP table entries, is deleted at once.

In another example, for each valid lifetime value, if the duration during which the protocol connection is disconnected reaches the valid lifetime value, the MAC-IP table entry to which the valid lifetime value belongs is deleted.

In the above method, the remote MAC-IP table entry in the first network device includes a valid lifetime value, the valid lifetime value is used to indicate a valid lifetime of an IP address included in the remote MAC-IP table entry. If a duration during which the protocol connection is disconnected reaches the valid lifetime value, it indicates that the IP address included in the MAC-IP table entry is no longer valid. That is, the terminal that originally applied for the IP address is no longer able to use the IP address, deleting the remote MAC-IP table entry will not affect subsequent legitimacy verification of the terminal, will not affect the network security, and can prevent the remote MAC-IP table entry from continuing to occupy the resources of the first network device. Before the duration during which the protocol connection is disconnected reaches the valid lifetime value, the first network device will not delete the remote MAC-IP table entry. Therefore, in the case that the source address security check mechanism is enabled, it will not cause the drop of legal packets matching the remote MAC-IP table entry, and can prevent illegal packets from entering the network, which can improve the network security.

The following will be explained with specific examples and combined with FIG. 1, taking the first network device as Leaf1 and the second network device as Spine1 as an example, Leaf1 receives MAC-IP table entry 1 and MAC-IP table entry 2 notified by Spine1 and saves them as remote MAC-IP table entry 1 and remote MAC-IP table entry 2. Assuming that the valid lifetime of an IP address in the remote MAC-IP table entry 1 is 90000 seconds, and the valid lifetime value of an IP address in the remote MAC-IP table entry 2 is 100000 seconds.

In one implementation, if Leaf1 detects that the protocol connection between Spine1 and Leaf1 is disconnected, Leaf1 maintains the remote MAC-IP table entry 1 and remote MAC-IP table entry 2 for 100000 seconds starting from the moment of detecting the disconnection of the protocol connection. If the protocol connection between Leaf1 and Spine1 has not been restored after 100000 seconds, Leaf1 deletes the remote MAC-IP table entry 1 and remote MAC-IP table entry 2.

In this way, the first network device can delete multiple remote MAC-IP table entries at once, avoiding resource waste without affecting network security, and saving processing costs during the process of deleting remote table entries by the first network device.

In another example, taking Leaf1 which includes the aforementioned remote MAC-IP table entry 1 and remote MAC-IP table entry 2 as an example, if Leaf1 detects that the protocol connection between Spine1 and Leaf1 is disconnected, then Leaf1 maintains the remote MAC-IP table entry 1 for 90000 seconds starting from the moment of detecting the disconnection of the protocol connection. If the protocol connection has not been restored after 90000 seconds, the remote MAC-IP table entry 1 is deleted. Leaf1 maintains the remote MAC-IP table entry 2 for 100000 seconds starting from the moment of detecting the disconnection of the protocol connection. If the protocol connection has not been restored after 100000 seconds, the remote MAC-IP table entry 2 is deleted.

In this way, each invalid remote MAC-IP table entry can be deleted in a timely and accurate manner, avoiding resource occupation by invalid remote MAC-IP table entries without affecting network security.

The first network device in the example of the present disclosure can also generate local MAC-IP table entries and notify the local MAC-IP table entries to other network devices. The process specifically includes:
establishing, when the first network device generates a DHCP relay table entry, a local MAC-IP table entry based on the DHCP relay table entry, and issuing a forwarding MAC-IP table entry corresponding to the local MAC-IP table entry to hardware resources, the local MAC-IP table entry includes a first valid lifetime value of a first IP address.

In the example of the present disclosure, the first network device can serve as a DHCP relay device. After applying an IP address from the DHCP server for the terminal, the DHCP relay device can obtain a first IP address assigned by the DHCP server for the terminal, as well as a preferred lifetime value and valid lifetime value of the first IP address. In the example of the present disclosure, the first network device can add the first valid lifetime value of the first IP address to the local MAC-IP table entry, and in an example, the preferred lifetime value of the first IP address can also be added to the local MAC-IP table entry.

Taking IPv6 network as an example, the local MAC-IP table entry at least includes the following fields shown in Table 1:

**Table 1**

| Field | Description |
|---|---|
| IPv6 address | IPv6 address of DHCPv6 terminal |
| MAC Address | MAC address of DHCPv6 terminal |
| Port index | DHCPv6 relay receives second layer port information of DHCPv6 request packet |
| Interface | DHCPv6 Relay Interface |
| Inner VLAN | Virtual Local Area Network Tag (VLAN Tag) of the inner layer of DHCPv6 relay user address table entry |
| Outer VLAN | VLAN Tag of the outer layer of DHCPv6 relay user address table entry |
| Preferred lifetime | Preferred lifetime value of the IPv6 address, in seconds |
| Valid lifetime | Valid lifetime value of the IPv6 address, in seconds |

Wherein the local MAC-IP table entry is a control MAC-IP table entry, which is maintained by the software of the network device and can be stored in the memory of the network device. The control plane can perform legitimacy check on the protocol packet based on the control MAC-IP table entry, such as perform legitimacy check on the ND packet.

The forwarding MAC-IP table entry corresponding to the local MAC-IP table entry includes the MAC address and IPv6 address fields mentioned above, which are stored in the hardware resources of the hardware forwarding chip. The MAC-IP table entry resources in the hardware forwarding chip need to be consumed to perform legitimacy check on business messages of the forwarding plane. Wherein, the MAC-IP table entry resources in the hardware forwarding chip are relatively scarce resources.

After generating the local MAC-IP table entry mentioned above, the first network device can send a first MAC-IP notification message to a third network device to enable the third network device to establish a first remote MAC-IP table entry.

Wherein, the first MAC-IP notification message includes a first sequence number and the first valid lifetime value, and the first remote MAC-IP table entry includes the first sequence number and the first valid lifetime value. The first sequence number is a sum of 1 and a maximum sequence number in a remote MAC-IP table entry or remote MAC-IP table entries that matches/match the local MAC-IP table entry.

It can be understood that the first MAC-IP notification message further includes the MAC address and first IP address in the local MAC-IP table entry, and correspondingly, the first remote MAC-IP table entry further includes the MAC address and first IP address.

Wherein the third network device is an aggregation device, and the third and second network devices can be the same aggregation device or different aggregation devices.

The remote MAC-IP table entry that matches the local MAC-IP table entry refers to a remote MAC-IP table entry that has the same MAC address and IP address as the local MAC-IP table entry. If the first network device stores a remote MAC-IP table entry that matches the local MAC-IP table entry, it indicates that the terminal is migrated from other access devices, and each remote MAC-IP table entry includes a sequence number. The larger the sequence number carried in the remote MAC-IP table entry, the later the generation time of the remote MAC-IP table entry.

Taking the IPv6 network as an example, the first MAC-IP notification message can include the fields shown in Table 2:

**Table 2**

| Field | Description |
|---|---|
| IPv6 address | IPv6 address of DHCPv6 terminal |
| MAC Address | MAC address of DHCPv6 terminal |
| Preferred lifetime | Preferred lifetime value of the IPv6 address, in seconds |
| Valid lifetime | Valid lifetime value of the IPv6 address, in seconds |
| Sequence Number | Sequence number |

Based on the above examples, the first network device may delete ARP or ND table entries. For example, taking the IPv6 scenario as an example, if some terminals do not respond to the aging detection message of ND table entries initiated by the first network device in a locked screen or other state, it may cause the ND table entries corresponding to the terminal in the first network device to be aged and deleted. Alternatively, if the access device detects that the access interface of the terminal is disconnected, the access device can delete the ND table entries of the terminal that was launched from that access interface.

After the first network device issues a forwarding MAC-IP table entry corresponding to a local MAC-IP table entry to the hardware resources, when an access table entry that matches the local MAC-IP table entry is deleted, the forwarding MAC-IP table entry is deleted.

Wherein the access table entry is an ND table entry or an ARP table entry.

In an example of the present disclosure, deleting the forwarding MAC-IP table entry from the hardware resources can save hardware resources. And since the local MAC-IP table entry stored in the memory have not been deleted at this time, if the terminal reconnects and learns the access table entry of the terminal again, it can also issue the forwarding MAC-IP table entry based on the local MAC-IP table entry to hardware resources again, without causing legal packets to be discarded due to the deletion of the forwarding MAC-IP table entry, which can improve network security.

In addition, deleting an ND or ARP table entry does not mean that the IP address lease applied by the terminal has invalid. Therefore, deleting an ND or ARP table entry will not delete the DHCP relay table entry corresponding to the terminal.

In the example of the present disclosure, the first network device can also receive MAC-IP table entries notified by other network devices. Based on this, in the above S201, before acquiring, when a protocol connection between the first network device and the second network device is disconnected, a valid lifetime value included in each remote MAC-IP table entry, the method further includes:
receiving a second MAC-IP notification message sent by the second network device and establishing a second remote MAC-IP table entry. Wherein the second MAC-IP notification message includes a second valid lifetime value of a second IP address and a second sequence number; the second remote table entry includes the second valid lifetime value of the second IP address and the second sequence number. It can be understood that the second MAC-IP notification message further includes: MAC address and second IP address. Correspondingly, the second remote MAC-IP table entry further includes the MAC address and the second IP address.

In an example, the second MAC-IP notification message may further include a preferred lifetime value of the second IP address, and correspondingly, the remote MAC-IP table entry may further include a preferred lifetime value of the second IP address.

It can be understood that the second network device notifies the first network device of MAC-IP table entries received from other network devices other than the first network device, so that after the terminal migrates into the first network device from other access devices, the first network device can use the second remote MAC-IP table entry to perform legitimacy check on the terminal's packets, thereby rejecting illegal packets from entering the network, and improving network security. And since the second MAC-IP notification message includes the second sequence number, if the terminal is migrated to the first network device subsequently, the first network device can acquire migration status of the terminal based on the sequence number.

The first network device can store the second remote MAC-IP table entry in memory. At this time, the second remote MAC-IP table entry does not occupy the control MAC-IP table entry resources in the memory, that is, the first network device can use free resources in the memory other than the control MAC-IP table entry resources to store the second remote MAC-IP table entry, and at this time, the remote MAC-IP table entry does not occupy hardware resources. The first network device can maintain a remote MAC-IP table entry for the second network device, and the second remote MAC-IP table entry is stored in the remote MAC-IP table.

Taking the IPv6 application scenario as an example, the fields included in the second remote MAC-IP table entry are shown in Table 3:

**Table 3**

| Field | Description |
|---|---|
| IPv6 address | IPv6 address of DHCPv6 terminal |
| MAC Address | MAC address of DHCPv6 terminal |
| Preferred lifetime | Preferred lifetime value of the IPv6 address, in seconds |
| Valid lifetime | Valid lifetime value of the IPv6 address, in seconds |
| Sequence Number | Sequence number |

In an example of the present disclosure, the first network device further includes a local MAC-IP table, the local MAC-IP table includes a first local MAC-IP entry, the first local MAC-IP entry includes a third sequence number.

After establishing a second remote MAC-IP table entry, if the second remote MAC-IP table entry matches the first local MAC-IP table entry, and the second sequence number is greater than the third sequence number, then deleting the first local MAC-IP table entry, and deleting the DHCP relay table entry corresponding to the first local MAC-IP table entry.

Wherein the second remote MAC-IP table entry matches the first local MAC-IP table entry refers to: the MAC address and IP address included in the second remote MAC-IP table entry are the same as the MAC address and IP address included in the first local MAC-IP table entry.

It can be understood that if the second sequence number is greater than the third sequence number, it indicates that the terminal corresponding to the first local MAC-IP table entry has been migrated to other access devices, that is, the first network device may not receive the business packets sent by the terminal before the terminal is migrated back again. Correspondingly, the first network device may not continue to use the first local MAC-IP table entry to perform legitimacy check on the terminal's business packets. Therefore, the first local MAC-IP table entry can be deleted, and the DHCP relay table entry corresponding to the first local MAC-IP table entry can be deleted.

Wherein the first network device can delete the first local MAC-IP table entry from the memory and delete the forwarding MAC-IP table entry corresponding to the first local MAC-IP table entry stored in the hardware resources of the hardware forwarding chip. In this way, the memory and hardware resources of the first network device can be saved without affecting network security.

It should be noted that after generating the first local MAC-IP table entry, the first network device may notify the first local MAC-IP table entry to other network devices. Correspondingly, after the first network device deletes the first local MAC-IP table entry, the first network device needs to send a MAC-IP revocation message to other network devices, to make the other network devices delete the remote MAC-IP table entry corresponding to the first local MAC-IP table entry.

In addition, when the first network device deletes the DHCP relay table entry due to terminal release of IP address or aging of IP address leases, it can synchronously delete the local MAC-IP table entry corresponding to the DHCP relay table entry.

In another example of the present disclosure, the first network device includes a local MAC-IP table, which includes at least one local MAC-IP table entry. After establishing the second remote MAC-IP table entry, the method further includes:
Block A, receiving a first packet sent by a terminal, the first packet includes a MAC address and an IP address of the terminal;
Block B, if there is no local MAC-IP table entry in the local MAC-IP table that matches the MAC address and IP address of the terminal, and the MAC address and IP address of the terminal match the second remote MAC-IP table entry, then performing access detection on the terminal.

It can be understood that if there is no local MAC-IP table entry in the local MAC-IP table that matches the MAC address and IP address of the terminal, and the MAC address and IP address of the terminal match the second remote MAC-IP table entry, it indicates that the terminal has migrated from other access devices.

In an example, after the terminal is migrated to the AP attached to the first network device, if the terminal does not immediately update the IP address lease, the first network device can receive a first packet from the terminal, the first packet can be a protocol packet or a business packet.

After the first network device receives the first packet, the forwarding plane of the first network device may generate a first packet event for the source MAC address of the first packet. In an IPv6 scenario, this first packet event may trigger ND detection once, and in an IPv4 scenario, this first packet event may trigger ARP detection once.

Block C, generating, if an access response sent by the terminal is received, a synthetic MAC-IP table entry. The synthetic MAC-IP table entry includes the MAC address and IP address , port identifier, and VLAN identifier of the terminal.

In the IPv4 scenario, after the first network device performs ARP detection, if it receives the access response sent by the terminal, it can generate an ARP table entry. The ARP table entry includes the port identifier and VLAN identifier for terminal access, and then the first network device can generate a synthetic MAC-IP table entry based on the second remote MAC-IP table entry and ARP table entry.

In the IPv6 scenario, after the first network device performs ND detection, if it receives the access response sent by the terminal, it can generate a ND table entry. The ND table entry includes the port identifier and VLAN identifier for terminal access, and then the first network device can generate a synthetic MAC-IP table entry based on the second remote MAC-IP table entry and ND table entry.

Taking the IPv6 scenario as an example, the fields included in the synthetic MAC-IP table entry are shown in Table 4:

**Table 4**

| Field | Description |
|---|---|
| IPv6 address | IPv6 address of DHCPv6 terminal (from remote MAC-IP table |
| | entry) |
| MAC Address | MAC address of DHCPv6 terminal (from the remote MAC-IP table entry and the first packet carrying the MAC address) |
| Port index | DHCPv6 relay device receives second layer port information of DHCPv6 terminal request packet (from the ND table entry) |
| Interface | DHCPv6 relay interface (from the ND table entry) |
| Inner VLAN | VLAN Tag of the inner layer of DHCPv6 relay user address table entry (from the ND table entry) |
| Outer VLAN | VLAN Tag of the outer layer of DHCPv6 relay user address table entry (from the ND table entry) |
| Preferred lifetime | Preferred lifetime value of the IPv6 address, in seconds (from the remote MAC-IP table entry) |
| Valid lifetime | Valid lifetime value of the IPv6 address, in seconds (from the remote MAC-IP table entry) |

It should be noted that the synthetic MAC-IP table entry is only used in the first network device that generated the synthetic MAC-IP table entry, and the first network device may not notify the synthetic MAC-IP table entry to other network devices.

Wherein, the synthetic MAC-IP table entry occupies resources for storing and controlling the MAC-IP table entry in the memory of the first network device.

Block D, generating a forwarding MAC-IP table entry based on the synthetic MAC-IP table entry, the forwarding MAC-IP table entry includes the MAC address and IP address of the terminal.

Block E, issuing the forwarding MAC-IP table entry to the hardware resources.

Wherein the hardware resources are hardware resources used for storing and forwarding the MAC-IP table entry in the hardware forwarding chip.

Using the above method, after the first network device generates a second remote MAC-IP table entry, at this time, the terminal may not have migrated to the terminal attached to the first network device. Therefore, there is no need to use the second remote MAC-IP table entry for security check, and then there is no need to issue the forwarding MAC-IP table entry corresponding to the second remote MAC-IP table entry to hardware resources, which can avoid occupying scarce hardware resources. When the first network device determines that the terminal corresponding to the second remote MAC-IP table entry is connected to the first network device, a synthetic MAC-IP table entry is generated, and the forwarding MAC-IP table entry corresponding to the synthetic MAC-IP table entry is issued to hardware resources. This can then achieve control and forwarding checks on the terminal's packets, thereby rejecting illegal packets from entering the network, and improving network security.

Based on the above examples, the first network device may delete ARP or ND table entries. For example, taking the IPv6 scenario as an example, if some terminals do not respond to the aging detection message of ND table entry initiated by the first network device in a locked screen or other state, it may cause the ND table entry corresponding to the terminal in the first network device to be aged and deleted. Alternatively, if the access device detects that the access interface of the terminal is disconnected, the access device can delete the ND table entry of the terminal that was launched from that access interface.

When the access table entry of the terminal is deleted, the first network device can delete the synthetic MAC-IP table entry and the forwarding MAC-IP table entry.

Wherein the access table entry of the terminal is the ND table entry or ARP table entry corresponding to the terminal.

Due to the fact that the first network device only deletes the ND table entry or ARP table entry when it believes that the terminal has been disconnected, there is temporarily no need to perform legitimacy check on the packets from the terminal, thus the synthetic MAC-IP table entry stored in the memory can be deleted, and the forwarding MAC-IP table entry corresponding to the synthetic MAC-IP table entry can be deleted. This can reduce the occupation of memory and hardware resources for the first network device. Due to the fact that the second remote MAC-IP table entry corresponding to the synthetic MAC-IP table entry in the first network device has not been deleted, if the terminal is accessed once again, the first network device can still generate the synthetic MAC-IP table entry again based on the second remote MAC-IP table entry, which will not cause legal packets from the terminal to be discarded. The first network device uses the synthetic MAC-IP table entry to perform security check on the packets, which can improve network security.

The following is an introduction to the MAC-IP notification message sent by the first network device.

The MAC-IP notification message includes a first extended community attribute, which includes the valid lifetime value of the IP address.

In an example, the MAC-IP notification message includes a second extended community attribute, which includes the sequence number of the MAC-IP table entry.

The first network device can send the MAC-IP notification message and MAC-IP revocation message based on the BGP protocol, and both the MAC-IP notification message and MAC-IP revocation message can be BGP update packets.

Wherein the MAC-IP notification message can be a BGP update packet that carries Multiprotocol Reachable Network Layer Reachability Information (MP_ REACH_NLRI) attribute, MP_REACH_NLRI attribute indicates that the terminal corresponding to the MAC-IP table entry is reachable to the device sending the MAC-IP notification message.

The MAC-IP revocation message can be a BGP update packet that carries Multiprotocol UNReachable Network Layer Reachability Information (MP_ UNREACH_ NLRI) attribute, MP_UNREACH_NLRI attribute indicates that the terminal corresponding to the MAC-IP table entry is unreachable to the device sending the MAC-IP revocation message.

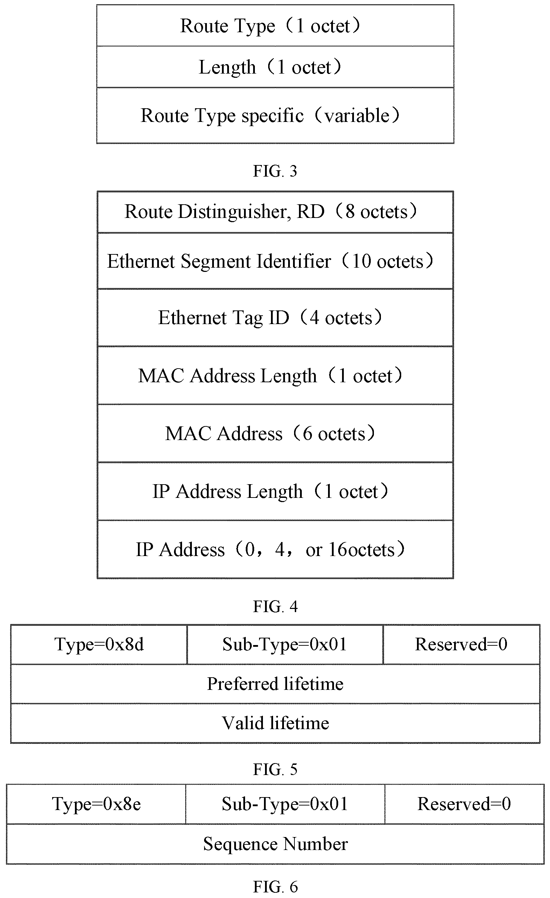

The MP_REACH_NLRI attribute and MP_UNREACH_NLRI attribute all include MAC-IP NLRI. The format of MAC-IP NLRI is shown in FIG. 3, including Route Type, Length, and Route Type specific.

Wherein Route Type represents the type of MAC-IP NLRI, occupying 1 octet. In the example of the present disclosure, this route type can be defined as the route type used to transmit the MAC-IP table entry.

Length represents the length of MAC-IP NLRI, occupying 1 octet;
Route Type specific represents the route type of MAC-IP NLRI, which occupies a variable number of bits.

As shown in FIG. 4, Route Type specific includes: Route Distinguisher (RD), Ethernet Segment Identifier, Ethernet Tag ID, MAC Address Length, MAC Address, IP Address Length, and IP Address.

Wherein RD occupies 8 octets;
The Ethernet Segment Identifier is a unique non zero identifier that identifies the Ethernet segment, occupying 10 octets;
Ethernet Tag ID is used to store the VLAN identifier of the VLAN where the terminal is located, occupying 4 octets;
MAC Address Length is used to record the length of the MAC address of the terminal, occupying 1 octet;
MAC Address is used to record the MAC address of the terminal, occupying 6 octet;
IP Address Length is used to record the length of the IP address of the terminal, occupying 1 octet;
IP Address is used to record the IP address of the terminal, occupying 0, 4 or 16 octets.

In order to carry the valid lifetime value of the IP address in the MAC-IP table entry in the BGP Update packet, the BGP protocol can be extended, a first extended community attribute of the MAC-IP table entry is introduced in the BGP protocol, the length of the first extended community attribute can be 16 bytes, as shown in FIG. 5.

Wherein Type represents the type of the first extended community attribute, with a length of 1 byte; as an example, the value of Type can be 0x8d, and the value of Type can be set according to the actual situation, which is not limited by the examples of the present disclosure.

Sub-Type represents the sub-type of the first extended community attribute, with a length of 1 byte; as an example, the value of Sub-Type can be 0x01, and the value of Sub-Type can be set according to the actual situation, which is not limited by the examples of the present disclosure.

Reserved is a reserved bit, with a length of 2 byte; as an example, the value of Reserved can be 0, and the value of Reserved can be set according to the actual situation, which is not limited by the examples of the present disclosure.

Preferred lifetime is a preferred lifetime value of the IP address in the local MAC-IP table entry, with a length of 4 bytes. This parameter is not currently used in the example of the present disclosure.

Valid lifetime is the valid lifetime value of the IP address in the local MAC-IP table entry, with a length of 4 bytes.

Similarly, in order to carry the sequence number in the BGP Update packet, the BGP protocol can be extended, a second extended community attribute corresponding to the MAC-IP table entry is introduced in the BGP protocol, the length of the second extended community attribute can be 8 bytes, as shown in FIG. 6.

Wherein Type represents the type of the second extended community attribute, with a length of 1 byte; as an example, the value of Type can be 0x8e, and the value of Type can be set according to the actual situation, which is not limited by the examples of the present disclosure.

Sub-Type represents the sub-type of the second extended community attribute, with a length of 1 byte; as an example, the value of Sub-Type can be 0x01, and the value of Sub-Type can be set according to the actual situation, which is not limited by the examples of the present disclosure.

Reserved is a reserved bit, with a length of 2 byte; as an example, the value of Reserved can be 0, and the value of Reserved can be set according to the actual situation, which is not limited by the examples of the present disclosure.

Sequence Number is the sequence number corresponding to the MAC-IP table entry, with a length of 4 bytes.

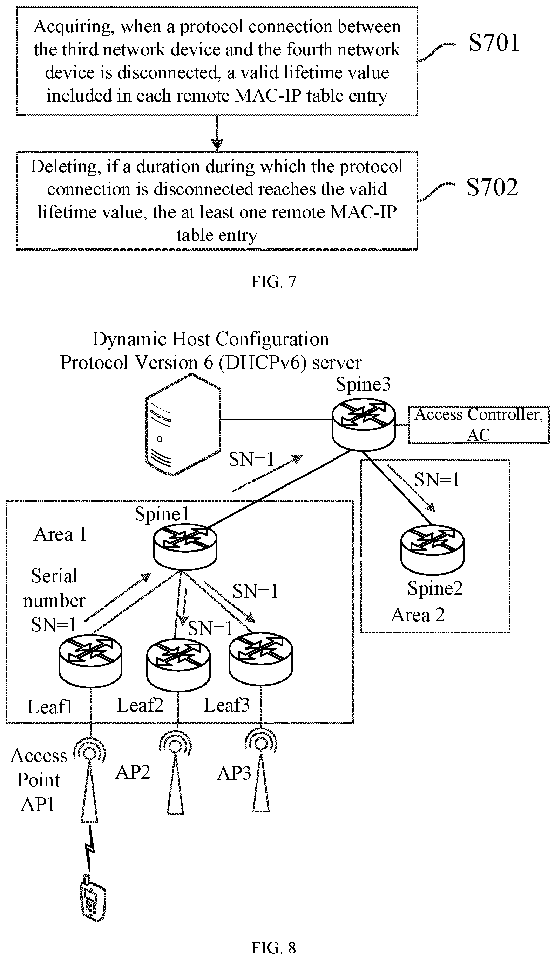

Corresponding to the above example, an example of present disclosure also provides a method for security table entry maintenance, which is applied to a second network device, which can be Spine1, Spine2, or Spine3 in FIG. 1. The second network device includes a first remote MAC-IP table, and the first remote MAC-IP table includes at least one remote MAC-IP table entry notified by a fourth network device, as shown in FIG. 7. The method includes:
S701, acquiring, when a protocol connection between the second network device and the fourth network device is disconnected, a valid lifetime value included in each remote MAC-IP table entry.

Wherein the valid lifetime value is used to indicate a valid lifetime of an IP addresses included in the remote MAC-IP table entry.

The second network device can be an aggregation device. The fourth network device can be an access device or an aggregation device that has a protocol connection with the second network device.

Taking the network architecture shown in FIG. 1 as an example, in the case where the second network device can be Spine1 as shown in FIG. 1, and the fourth network device can be Leaf1, Leaf2 or Leaf3, and it can also be Spine3.

Alternatively, in the case where the second network device is Spine3 in FIG. 1, the fourth network device can be Spine1 or Spine2.

The protocol connection between the second network device and the fourth network device can be BGP protocol connection. Alternatively, the protocol connection between the second network device and the fourth network device can also be a customized private protocol connection. In the case where the protocol connection is a private protocol connection, each network device notifies the MAC-IP table entry through a private protocol.

S702, deleting, if a duration during which the protocol connection is disconnected reaches the valid lifetime value, the at least one remote MAC-IP table entry.

It can be understood that in the case where the first remote MAC-IP table includes one MAC-IP table entry, the second network device can acquire the valid lifetime value included in the MAC-IP table entry. The second network device takes a moment of detecting the disconnection of the protocol connection as a starting moment, and maintains the valid lifetime value of the remote MAC-IP table entry. That is, after detecting the disconnection of the protocol connection, the second network device maintains the valid lifetime value of the remote MAC-IP table entry and will not delete the remote MAC-IP table entry, until reaching the valid lifetime value.

If the protocol connection has not been restored when the duration from the start moment reaches the valid lifetime value, the remote MAC-IP table entry may be deleted.

For example, if the valid lifetime is 100000 seconds, the second network device starts timing after detecting the disconnection of the protocol connection, and maintains the remote MAC-IP table entry for 100000 seconds. If the protocol connection has not been restored after 100000 seconds, then the second network device may delete the remote MAC-IP table entry.

In the case where the first remote MAC-IP table includes multiple MAC-IP table entries, the second network device can acquire the valid lifetime values of multiple remote MAC-IP table entries.

In one example, after the duration during which the protocol connection is disconnected reaches all valid lifetime values acquired, that is, after the duration during which the protocol connection is disconnected reaches a maximum lifetime value among the acquired valid lifetime values, the multiple MAC-IP table entries included in the second remote MAC-IP table will be deleted at once.

In another example, for each valid lifetime value, if the duration during which the protocol connection is disconnected reaches the valid lifetime value, the MAC-IP table entry to which the valid lifetime value belongs is deleted.

Using the above method, the remote MAC-IP table entry in the second network device includes a valid lifetime value, the valid lifetime value is used to indicate a valid lifetime of an IP address included in the remote MAC-IP table entry. If a duration during which the protocol connection is disconnected reaches the valid lifetime value, it indicates that the IP address included in the MAC-IP table entry is no longer valid. That is, the terminal that originally applied for the IP address is no longer able to use the IP address, deleting the remote MAC-IP table entry will not affect subsequent legitimacy verification of the terminal, will not affect the network security, and can prevent the remote MAC-IP table entry from continuing to occupy the resources of the second network device. Before the duration during which the protocol connection is disconnected reaches the valid lifetime value, the second network device will not delete the remote MAC-IP table entry. Therefore, in the case that the source address security check mechanism is enabled, it will not cause the drop of legal packets matching the remote MAC-IP table entry, and can prevent illegal packets from entering the network, which can improve the network security.

In another example of the present disclosure, the second network device can receive MAC-IP table entries notified by other network devices. Based on this, in the above S201, before acquiring, when a protocol connection between the second network device and the fourth network device is disconnected, a valid lifetime value included in each remote MAC-IP table entry, the method further includes:
receiving a first MAC-IP notification message sent by the fourth network device and establishing a first remote MAC-IP table entry.

Wherein the first MAC-IP notification message includes a first valid lifetime value of a first IP address and a first sequence number. Correspondingly, the first remote MAC-IP table entry includes the first valid lifetime value and the first sequence number.

It can be understood that the first MAC-IP notification message further includes the MAC address and first IP address, and the first remote MAC-IP table entry further includes the MAC address and first IP address.

In an example, the first MAC-IP notification message may further include a preferred lifetime value of the first IP address, and correspondingly, the first remote MAC-IP table entry may further include the preferred lifetime value of the first IP address.

It can be understood that network devices can notify each other of MAC-IP table entries, which can enable the access devices accessed by the terminal to still perform legitimacy check on the terminal's packets based on the remote MAC-IP table entries after terminal migration, thereby rejecting illegal packets from entering the network, and improving network security.

In an example of the present disclosure, the second network device further includes at least one second remote MAC-IP table, at least one second remote MAC-IP table includes a second remote MAC-IP table entry, and the second remote MAC-IP table entry includes a second sequence number. After the second network device establishes the remote MAC-IP table entry, the method further includes:
sending, if the first sequence number is greater than the second sequence number, a second MAC-IP notification message to network devices other than the fourth network device, and the second MAC-IP notification message includes the first valid lifetime value and the first sequence number.

Wherein if the first sequence number is greater than the second sequence number, it indicates that there is no remote table entry that matches the first remote MAC-IP table entry and the included sequence number is greater than the first sequence number in each remote MAC-IP table entry stored by the second network device.

It can be understood that for remote MAC-IP table entries with the same IP address and MAC address, the larger the sequence number, the later the generation time of the remote MAC-IP table entry corresponding to the sequence number. Therefore, if the first sequence number is greater than the second sequence number, it indicates that the first remote MAC-IP table entry is the latest generated MAC-IP table entry, and it is necessary to notify the first remote MAC-IP table entry to other network devices other than the fourth network device.

Using the above method, as the sequence number is used to represent the generation order of MAC-IP table entries corresponding to the same terminal, the larger the sequence number, the later the generation time of MAC-IP table entries corresponding to the sequence number. Therefore, a remote MAC-IP table entry with a small sequence number may no longer be applicable to the terminal corresponding to that remote MAC-IP table entry. If the first sequence number is greater than the second sequence number, a second MAC-IP notification message is sent to other network devices other than the fourth network device. This can improve the timeliness and accuracy of the MAC-IP notification.

In another example of the present disclosure, based on the example corresponding to FIG. 7, the second network device further includes at least one third remote MAC-IP table, each third remote MAC-IP table includes at least one remote MAC-IP table entry.

It can be understood that after the second network device generates a remote MAC-IP table entry, it may notify the generated remote MAC-IP table entry to other network devices other than the fourth network device. Correspondingly, after deleting the remote MAC-IP table entry, the second network device also needs to send a MAC-IP revocation message or a MAC-IP notification message based on the deleted remote MAC-IP table entry. After the second network device deletes at least one remote MAC-IP table entry, there are two specific situations.

Situation 1, for each deleted remote MAC-IP table entry, if there is no remote MAC-IP table entry in the at least one third remote MAC-IP table which matches this deleted remote MAC-IP table entry, then a first MAC-IP revocation message is sent to other network devices other than the fourth network device.

Wherein the first MAC-IP revocation message includes a MAC address and an IP address in the remote MAC-IP table entry.

Furthermore, after receiving the first MAC-IP revocation message, other network devices other than the fourth network device can timely update their stored remote MAC-IP table entries to avoid continuing to use invalid remote MAC-IP table entries and improve network security.

Situation 2, for each deleted remote MAC-IP table entry, if there are remote MAC-IP table entries in the at least one third MAC-IP table which match this deleted remote MAC-IP table entry, then a third remote MAC-IP table entry with the highest sequence number is selected from the other matched MAC-IP table entries and a fifth MAC-IP notification message is sent to other network devices other than a fifth network device.

Wherein the third remote MAC-IP table entry includes a second valid lifetime value and a third sequence number. Correspondingly, the third MAC-IP notification message includes the second valid lifetime value and the third sequence number. The fifth network device is a source device of the third remote MAC-IP table entry. The fifth network device can be an access device or an upper level aggregation device of the aggregation device.

That is to say, if there are other remote MAC-IP table entries in the second network device which match the deleted remote MAC-IP table entry, then the second network device needs to re-notify a remote MAC-IP table entry with the same IP address and MAC address as the deleted remote MAC-IP table entry and with the highest sequence number.

It should be noted that in the remote MAC-IP table entries that match this deleted remote MAC-IP table entry, there may be multiple remote MAC-IP table entries with the highest sequence number, that is, multiple remote MAC-IP table entries with the same sequence number and the highest parallel. Then the second network device can randomly select one among the multiple remote MAC-IP table entries with the highest sequence number, and use the selected one remote MAC-IP table entry with the highest sequence number as the third remote MAC-IP table entry mentioned above, and notify other network devices other than the fifth network device.

For example, the second network device stores:
a remote MAC-IP table entry 1 from the network device A, whose sequence number is 3;
a remote MAC-IP table entry 2 from the network device B, whose sequence number is 2;
a remote MAC-IP table entry 3 from the network device C, whose sequence number is 1;
a remote MAC-IP table entry 4 from the network device D, whose sequence number is 2.

The MAC address and IP address in the four remote table entries mentioned above are the same. After the protocol connection between the second network device and network device A is disconnected and the remote MAC-IP table entry 1 is deleted according to the method described in the above example, it can be determined that the remote MAC-IP table entry 2 and the remote MAC-IP table entry 4 have the highest sequence number. The second network device randomly selects the remote MAC-IP table entry 2 from the remote MAC-IP table entry 2 and the remote MAC-IP table entry 4, then the second network device notifies the remote MAC-IP table entry 2 to the network device C and network device D.

After receiving the remote MAC-IP table entry 2 notified by the second network device, the network device C searches for the remote MAC-IP table entry 1 previously notified by the second network device, and modifies its stored remote MAC-IP table entry 1 to the remote MAC-IP table entry 2.

After receiving the remote MAC-IP table entry 2 notified by the second network device, the network device D searches for the remote MAC-IP table entry 1 previously notified by the second network device, and modifies its stored remote MAC-IP table entry 1 to the remote MAC-IP table entry 2.

In this way, after deleting the remote MAC-IP table entry, if the second network device still stores other remote MAC-IP table entries with the same MAC address and IP address, it can promptly notify the remote MAC-IP table entries to other network devices, which can prevent other network devices from continuing to use invalid remote MAC-IP table entries, thereby ensuring the accuracy of the remote MAC-IP table entries stored in each network device, and improving network security.

The following is an introduction to the MAC-IP notification message sent by the second network device.

The MAC-IP notification message sent by the second network device includes a first extended community attribute, which includes the valid lifetime value of the IP address.

The MAC-IP notification message sent by the second network device includes a second extended community attribute, which includes the sequence number of the MAC-IP table entry.

The format of MAC-IP notification message can refer to the relevant descriptions in the above examples.

The following is an introduction to the method for security table entry maintenance provided in the example of the present disclosure, combined with specific application scenarios.

As shown in FIG. 8, the structure of FIG. 8 is the same as that of FIG. 1, where Leaf1, Leaf2, and Leaf3 are access devices, Spine1 and Spine2 are aggregation devices, and Spine3 is an upper level aggregation device of Spine1 and Spine2.

After Leaf1 in Zone 1 generates a new local MAC-IP table entry, it sends a MAC-IP notification message to Spine1 through a protocol connection. The MAC-IP notification message includes an IP address, a MAC address, a Sequence Number (SN), and a valid lifetime value of the IP address in the local MAC-IP table entry. The sequence number of the MAC-IP notification message is 1.

After receiving the MAC-IP notification message sent by Leaf1, Spine1 generates a remote MAC-IP table entry, which includes an IP address, a MAC address, a SN, and a valid lifetime value of the IP address in the MAC-IP notification message.

At this point, Spine1 only stores a remote MAC-IP table entry with sequence number 1 corresponding to the terminal. Spine1 can send a MAC-IP notification message to Leaf2, Leaf3, and Spine3, the MAC-IP notification message includes the content of the remote MAC-IP table entry.

Leaf2, Leaf3, and Spine3 can also generate a remote MAC-IP table entry after receiving the MAC-IP notification message.

Furthermore, assuming that there are no other remote MAC-IP table entries that match the remote MAC-IP table entry in Spine3, then Spine3 sends a MAC-IP notification message to Spine2 in Zone 2, the MAC-IP notification message includes the content of the remote MAC-IP table entry.

After receiving the MAC-IP notification message, Spine2 can also generate a remote MAC-IP table entry.

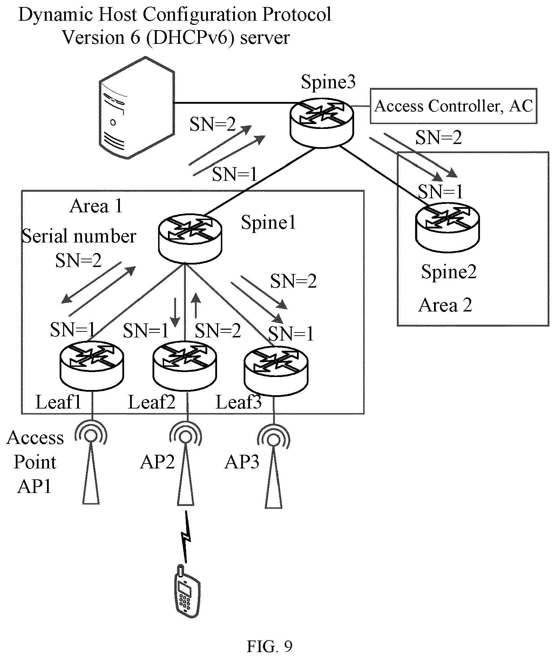

Furthermore, based on FIG. 8, if the terminal is migrated to AP2 linked to Leaf2, as shown in FIG. 9, in one example, if the terminal immediately initiates an IPv6 address lease update to the DHCPv6 server, then Leaf2 can generate a DHCP relay table entry and generate a local MAC-IP table entry based on the DHCP relay table entry.

Then, Leaf2 can send a MAC-IP notification message to Spine1, the MAC-IP notification message carries a sequence number of 2. After receiving the MAC-IP notification message, Spine1 generates a remote MAC-IP table entry based on the MAC-IP notification message, the remote MAC-IP table entry includes a sequence number of 2.

At this point, Spine1 determines that there is still a remote MAC-IP with a sequence number of 1 stored locally, in which the MAC address and IP address are the same as that in the newly generated remote MAC-IP table entry.

Since the sequence number in the newly generated remote MAC-IP table entry is relatively large, Spine1 notifies the remote MAC-IP table entry with sequence number of 2 to Spine3, Leaf1, and Leaf3.

After Spine3, Leaf1, and Leaf3 receive the MAC-IP notification message, Leaf1 generates a remote MAC-IP table entry with sequence number of 2. Spine3 and Leaf3 both store a remote MAC-IP table entry with sequence number of 1 from Spine1, and the MAC address and IP address in the remote MAC-IP table entry are the same as those in the received MAC-IP notification message, then Spine3 and Leaf3 modify the remote MAC-IP table entry with sequence number of 1 to the remote MAC-IP table entry with sequence number of 2.

Spine3 may also send the MAC-IP notification message to Spine2, such that Spine2 modifies the corresponding remote MAC-IP table entry with sequence number of 1 to the remote MAC-IP table entry with sequence number of 2.

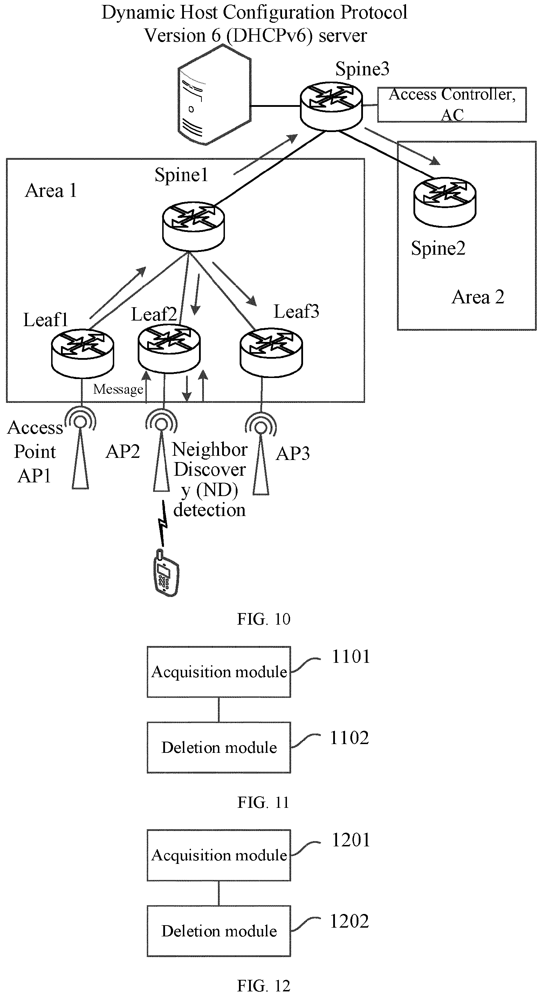

If the terminal uses another example, based on FIG. 8, if the terminal is migrated to AP2 linked to Leaf2, as shown in FIG. 10, if the terminal does not immediately initiate an IPv6 address lease update to the DHCPv6 server, and if Leaf2 receives a packet sent by the terminal, the packet can be a negotiation packet or a business packet, then Leaf2 is triggered through the first packet event to perform ND detection on the terminal, and Leaf2 learns the ND table entry corresponding to the terminal, and generate a synthetic MAC-IP table entry based on the ND table entry and the remote MAC-IP table entry corresponding to the terminal stored on Leaf2.

It should be noted that based on the example in FIG. 10, after Leaf2 generates a synthetic MAC-IP table entry corresponding to the terminal, if the terminal initiates an IPv6 address lease update to the DHCPv6 server subsequently, the access device can execute the process described in FIG.9, that is, Leaf2 can also generate a local MAC-IP table entry for the terminal.

Based on the same concept, an example of the present disclosure provides an apparatus for security table entry maintenance, wherein it is applied to a first network device, the first network device includes a remote MAC-IP table, the remote MAC-IP table includes at least one remote MAC-IP table entry notified by a second network device, as shown in FIG. 11, the apparatus includes:
an acquisition module 1101, to acquire, when a protocol connection between the first network device and the second network device is disconnected, a valid lifetime value included in each remote MAC-IP table entry, the valid lifetime value is used to indicate a valid lifetime of an IP address included in the remote MAC-IP table entry;
a deletion module 1102, to delete, if a duration during which the protocol connection is disconnected reaches the valid lifetime value, the at least one remote MAC-IP table entry.

In an example, the apparatus further includes:
an establishing module, to establish, when the first network device generates a DHCP relay table entry, a local MAC-IP table entry based on the DHCP relay table entry, and issue a forwarding MAC-IP table entry corresponding to the local MAC-IP table entry to hardware resources, the local MAC-IP table entry includes a first valid lifetime value of a first IP address;
a sending module, to send a first MAC-IP notification message to a third network device to enable the third network device to establish a first remote MAC-IP table entry;
wherein, the first MAC-IP notification message includes a first sequence number and the first valid lifetime value, and the first remote MAC-IP table entry includes the first sequence number and the first valid lifetime value.

The first sequence number is a sum of 1 and a maximum sequence number in a remote MAC-IP table entry or remote MAC-IP table entries that matches/match the local MAC-IP table entry.

In an example, the deletion module 1102 is further to delete, when an access table entry that matches the local MAC-IP table entry is deleted, the forwarding MAC-IP table entry.

In an example, the apparatus further includes:
a receiving module, to receive a second MAC-IP notification message sent by the second network device, the second MAC-IP notification message includes a second valid lifetime value of a second IP address and a second sequence number;
an establishing module, to establish a second remote MAC-IP table entry, which includes the second valid lifetime value and the second sequence number.

In an example, the first network device includes a local MAC-IP table, which includes at least one local MAC-IP table entry;
the apparatus further includes a detection module, a generation module and an issuing module;
the receiving module is further to receive a first packet sent by a terminal, the first packet includes a MAC address and an IP address of the terminal;
the detection module is to perform access detection on the terminal, if there is no local MAC-IP table entry in the local MAC-IP table which matches the MAC address and IP address of the terminal, and the MAC address and IP address of the terminal match the second remote MAC-IP table entry;
the generation module is to generate, if an access response sent by the terminal is received, a synthetic MAC-IP table entry, which includes a port identifier, a VLAN identifier, the MAC address and the IP address of the terminal;
the generation module is further to generate a forwarding MAC-IP table entry based on the synthetic MAC-IP table entry, the forwarding MAC-IP table entry includes the MAC address and IP address of the terminal;
the issuing module is to issue the forwarding MAC-IP table entry to hardware resources.

In an example, the deletion module 1102, is further to delete, when an access table entry of the terminal is deleted, the synthetic MAC-IP table entry and the forwarding MAC-IP table entry.

In an example, the first network device includes a local MAC-IP table, the local MAC-IP table includes a first local MAC-IP entry, the first local MAC-IP entry includes a third sequence number;
the deletion module 1102 is further to delete, if the second remote MAC-IP table entry matches the first local MAC-IP table entry, and the second sequence number is greater than the third sequence number, the first local MAC-IP table entry, and delete a DHCP relay table entry corresponding to the first local MAC-IP table entry.

In an example, the MAC-IP notification message sent by the first network device includes a first extended community attribute, which includes a valid lifetime value of an IP address.

In an example, the MAC-IP notification message sent by the first network device further includes a second extended community attribute, which includes a sequence number of a MAC-IP table entry.

Based on the same concept, an example of the present disclosure further provides an apparatus for security table entry maintenance, wherein it is applied to a second network device, wherein the second network device includes a first remote MAC-IP table, the first remote MAC-IP table includes at least one remote MAC-IP table entry notified by a fourth network device, and the apparatus includes:
an acquisition module 1201, to acquire, when a protocol connection between the second network device and the fourth network device is disconnected, a valid lifetime value included in each remote MAC-IP table entry, the valid lifetime value is used to indicate a valid lifetime of an IP address included in the remote MAC-IP table entry;
a deletion module 1202, to delete, if a duration during which the protocol connection is disconnected reaches the valid lifetime value, the at least one remote MAC-IP table entry.

**In** an example, the apparatus further includes:
a receiving module, to receive a first MAC-IP notification message sent by the fourth network device, the first MAC-IP notification message includes a first valid lifetime value of a first IP address and a first sequence number;
an establishing module, to establish a first remote MAC-IP table entry, which includes the first valid lifetime value and the first sequence number.

In an example, the second network device further includes at least one second remote MAC-IP table, the at least one second remote MAC-IP table includes a second remote MAC-IP table entry, the second remote MAC-IP table entry matches the first remote MAC-IP table entry, and the second remote MAC-IP table entry includes a second sequence number; the apparatus further includes:
a sending module, to send, if the first sequence number is greater than the second sequence number, a second MAC-IP notification message to network devices other than the fourth network device, and the second MAC-IP notification message includes the first valid lifetime value and the first sequence number.

In an example, the second remote device further includes at least one third remote MAC-IP table, each third remote MAC-IP table includes at least one remote MAC-IP table entry; the apparatus further comprises a sending module;
the sending module is to:
for each deleted remote MAC-IP table entry, if there is no remote MAC-IP table entry in the at least one third remote MAC-IP table which matches this deleted remote MAC-IP table entry, send a first MAC-IP revocation message to network devices other than the fourth network device, the first MAC-IP revocation message includes a MAC address and an IP address in the remote MAC-IP table entry; or,
for each deleted remote MAC-IP table entry, if there are remote MAC-IP table entries in the at least one third remote MAC-IP table which match this deleted remote MAC-IP table entry, select a third remote MAC-IP table entry with a highest sequence number from the matched remote MAC-IP table entries, the third remote MAC-IP table entry includes a second valid lifetime value and a third sequence number; send a third MAC-IP notification message to other network devices other than a fifth network device, the third MAC-IP notification message includes the second valid lifetime value and the third sequence number, and the fifth network device is a source device of the third remote MAC-IP table entry.

In an example, the MAC-IP notification message sent by the second network device includes a first extended community attribute, which includes a valid lifetime value of an IP address.

In an example, the MAC-IP notification message sent by the second network device further includes a second extended community attribute, which includes a sequence number of a MAC-IP table entry.

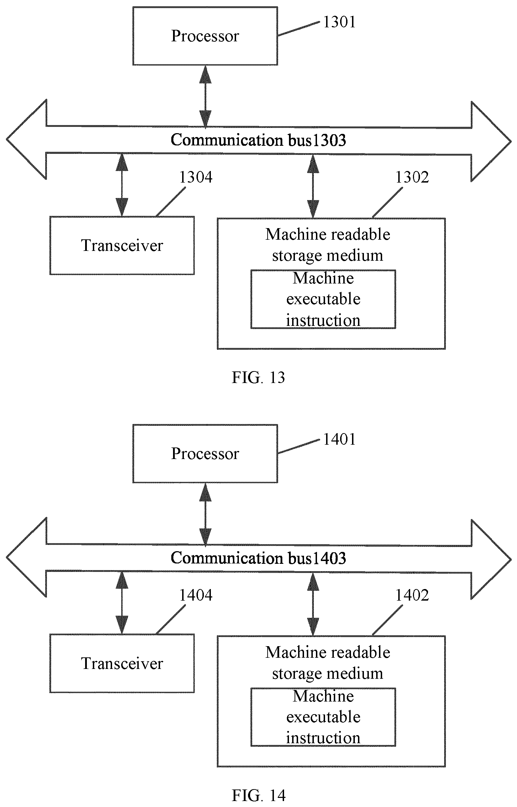

Based on the same concept, an example of the present disclosure further provides a first network device, the first network device includes a remote MAC-IP table, the remote MAC-IP table includes at least one remote MAC-IP table entry notified by a second network device, as shown in FIG. 13, the first network device includes:
a processor 1301;
a transceiver 1304;
a machine storage medium 1302 having stored therein machine executable instructions which, when being executed by the processor 1301, cause the processor 1301 to perform the following operations:
   acquiring, when a protocol connection between the first network device and the second network device is disconnected, a valid lifetime value included in each remote MAC-IP table entry, the valid lifetime value is used to indicate a valid lifetime of an IP address included in the remote MAC-IP table entry;
   deleting, if a duration during which the protocol connection is disconnected reaches the valid lifetime value, the at least one remote MAC-IP table entry.

In an example, the machine executable instructions cause the processor 1301 to perform the following operations:
establishing, when the first network device generates a DHCP relay table entry, a local MAC-IP table entry based on the DHCP relay table entry, and issuing a forwarding MAC-IP table entry corresponding to the local MAC-IP table entry to hardware resources, the local MAC-IP table entry includes a first valid lifetime value of a first IP address;
sending via the transceiver 1304, a first MAC-IP notification message to a third network device to enable the third network device to establish a first remote MAC-IP table entry;
wherein, the first MAC-IP notification message includes a first sequence number and the first valid lifetime value, and the first remote MAC-IP table entry includes the first sequence number and the first valid lifetime value.

The first sequence number is a sum of 1 and a maximum sequence number in a remote MAC-IP table entry or remote MAC-IP table entries that matches/match the local MAC-IP table entry.

In an example, the machine executable instructions cause the processor 1301 to perform the following operations:
deleting, when an access table entry that matches the local MAC-IP table entry is deleted, the forwarding MAC-IP table entry.

In an example, the machine executable instructions cause the processor 1301 to perform the following operations:
receiving via the transceiver 1304, a second MAC-IP notification message sent by the second network device, the second MAC-IP notification message includes a second valid lifetime value of a second IP address and a second sequence number;
establishing a second remote MAC-IP table entry, which includes the second valid lifetime value and the second sequence number.

In an example, the first network device includes a local MAC-IP table, which includes at least one local MAC-IP table entry;
the machine executable instructions cause the processor 1301 to perform the following operations:
receiving via the transceiver 1304, a first packet sent by a terminal, the first packet includes a MAC address and an IP address of the terminal;
if there is no local MAC-IP table entry in the local MAC-IP table which matches the MAC address and IP address of the terminal, and the MAC address and IP address of the terminal match the second remote MAC-IP table entry, performing access detection on the terminal;
generating, if an access response sent by the terminal is received, a synthetic MAC-IP table entry, which includes a port identifier, a VLAN identifier, the MAC address and the IP address of the terminal;
generating a forwarding MAC-IP table entry based on the synthetic MAC-IP table entry, the forwarding MAC-IP table entry includes the MAC address and IP address of the terminal;
issuing the forwarding MAC-IP table entry to hardware resources.

In an example, the machine executable instructions cause the processor 1301 to perform the following operations:
deleting, when an access table entry of the terminal is deleted, the synthetic MAC-IP table entry and the forwarding MAC-IP table entry.

In an example, the first network device includes a local MAC-IP table, the local MAC-IP table includes a first local MAC-IP table entry, and the first local MAC-IP table entry includes a third sequence number; the machine executable instructions further cause the processor 1301 to perform the following operations:
if the second remote MAC-IP table entry matches the first local MAC-IP table entry, and the second sequence number is greater than the third sequence number, deleting the first local MAC-IP table entry, and deleting the DHCP relay table entry corresponding to the first local MAC-IP table entry.

In an example, the MAC-IP notification message sent by the first network device includes a first extended community attribute, which includes a valid lifetime value of an IP address.

In an example, the MAC-IP notification message sent by the first network device further includes a second extended community attribute, which includes a sequence number of a MAC-IP table entry.

In FIG. 13, it can further include a communication bus 1303. The processor 1301, the machine readable storage medium 1302 and the transceiver 1304 communicate with each other through the communication bus 1303, which can be a Peripheral Component Interconnect (PCI) bus or an Extended Industry Standard Architecture (EISA) bus, etc. The communication bus can include an address bus, a data bus, a control bus, or the like.

The transceiver 1304 can be a wireless communication module, and the transceiver 1304 interacts with other devices for data under the control of the processor 1301.

The machine readable storage medium 1302 can include a random access memory (RAM), or can include a non-volatile memory (NVM), for example at least one disk memory. In addition, the machine readable storage medium can also be at least one storage device located away from the processor described above.

The aforementioned processor 1301 can be a general-purpose processor, such as a central processing unit (CPU), a network processor (NP), or the like; it can also be a digital signal processor (DSP), an application specific integrated circuit (ASIC), a field-programmable gate array (FPGA) or other programmable logic device, a discrete gate or transistor logic device, a discrete hardware component.

Based on the same concept, an example of the present disclosure further provides a second network device, the second network device includes a first remote MAC-IP table, the first remote MAC-IP table includes at least one remote MAC-IP table entry notified by a fourth network device, as shown in FIG. 14, the second network device includes:
a processor 1401;
a transceiver 1404;
a machine storage medium 1402 having stored therein machine executable instructions which, when being executed by the processor 1401, cause the processor 1401 to perform the following operations:
   acquiring, when a protocol connection between the second network device and the fourth network device is disconnected, a valid lifetime value included in each remote MAC-IP table entry, the valid lifetime value is used to indicate a valid lifetime of an IP address included in the remote MAC-IP table entry;
   deleting, if a duration during which the protocol connection is disconnected reaches the valid lifetime value, the at least one remote MAC-IP table entry.

In an example, the machine executable instructions cause the processor 1401 to perform the following operations:
receiving via the transceiver 1404, a first MAC-IP notification message sent by the fourth network device, the first MAC-IP notification message includes a first valid lifetime value of a first IP address and a first sequence number;
establishing a first remote MAC-IP table entry, which includes the first valid lifetime value and the first sequence number.

In an example, the second network device further includes at least one second remote MAC-IP table, the at least one second remote MAC-IP table includes a second remote MAC-IP table entry, the second remote MAC-IP table entry matches the first remote MAC-IP table entry, and the second remote MAC-IP table entry includes a second sequence number; the machine executable instructions cause the processor 1401 to perform the following operations:
sending, if the first sequence number is greater than the second sequence number, a second MAC-IP notification message to other network devices other than the fourth network device, and the second MAC-IP notification message includes the first valid lifetime value and the first sequence number.

In an example, the second remote device further includes at least one third remote MAC-IP table, each third remote MAC-IP table includes at least one remote MAC-IP table entry; the machine executable instructions cause the processor 1401 to perform the following operations:
for each deleted remote MAC-IP table entry, if there is no remote MAC-IP table entry in the at least one third remote MAC-IP table which matches this deleted remote MAC-IP table entry, sending a first MAC-IP revocation message to other network devices other than the fourth network device, the first MAC-IP revocation message includes a MAC address and an IP address in the remote MAC-IP table entry; or,
for each deleted remote MAC-IP table entry, if there are remote MAC-IP table entries in the at least one third remote MAC-IP table which match this deleted remote MAC-IP table entry, selecting a third remote MAC-IP table entry with a highest sequence number from the matched remote MAC-IP table entries, the third remote MAC-IP table entry includes a second valid lifetime value and a third sequence number; sending a third MAC-IP notification message to other network devices other than the fifth network device, the third MAC-IP notification message includes the second valid lifetime value and the third sequence number, and the fifth network device is a source device of the third remote MAC-IP table entry.

In an example, the MAC-IP notification message sent by the second network device includes a first extended community attribute, which includes a valid lifetime value of an IP address.

In an example, the MAC-IP notification message sent by the second network device further includes a second extended community attribute, which includes a sequence number of a MAC-IP table entry.

In FIG. 14, it can further include a communication bus 1403. The processor 1401, the machine readable storage medium 1402 and the transceiver 1404 communicate with each other through the communication bus 1403, which can be a Peripheral Component Interconnect (PCI) bus or an Extended Industry Standard Architecture (EISA) bus, etc. The communication bus can include an address bus, a data bus, a control bus, or the like.

The transceiver 1404 can be a wireless communication module, and the transceiver 1404 interacts with other devices for data under the control of the processor 1401.

The machine readable storage medium 1402 can include a random access memory (RAM), or can include a non-volatile memory (NVM), for example at least one disk memory. In addition, the machine readable storage medium can also be at least one storage device located away from the processor described above.

The aforementioned processor 1401 can be a general-purpose processor, such as a central processing unit (CPU), a network processor (NP), or the like; it can also be a digital signal processor (DSP), an application specific integrated circuit (ASIC), a field-programmable gate array (FPGA) or other programmable logic device, a discrete gate or transistor logic device, a discrete hardware component.

Based on the same invention concept, according to the method for security table entry maintenance provided in the above example of the present disclosure, the present example of the present disclosure also provides a machine readable storage medium, which stores machine executable instructions that can be executed by the processor. The machine executable instructions cause the processor to implement any of the method for security table entry maintenance described above.

In still another example according to the present disclosure, there is also provided a computer program product with instructions that, when running on a computer, cause the computer to implement any of the method for security table entry maintenance in the described above examples.

It should be noted that the relationship terms herein such as "first", "second", and the like are only used for distinguishing one entity or operation from another entity or operation, but do not necessarily require or imply that there is any actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a." or "include(s) a." do not exclude that there are other identical elements in the processes, methods, articles, or devices which include these elements.

All the examples are described in corresponding ways, same or similar parts in each of the examples can be referred to one another, and the parts emphasized are differences to other examples. Particularly, the examples of the apparatus are described briefly, since they are similar to the examples of the method, and for similar parts, one could refer to the corresponding description of the examples of the method.

The description is only for preferred examples of the present disclosure, and examples are not so limited. Any modifications, substitutions, improvements, etc., which are made within the spirit and principles of the present disclosure, will fall into the protection scope of the present disclosure.

## Claims

1. A method for security table entry maintenance, which is applied to a first network device, the first network device comprising a remote MAC-IP table, the remote MAC-IP table comprising at least one remote MAC-IP table entry notified by a second network device, wherein the method comprises:
acquiring, in response to determining that a protocol connection between the first network device and the second network device is disconnected, a valid lifetime value included in each remote MAC-IP table entry, the valid lifetime value is used to indicate a valid lifetime of an IP address included in the remote MAC-IP table entry;
deleting, in response to determining that a duration during which the protocol connection is disconnected reaches the valid lifetime value, the at least one remote MAC-IP table entry.

2. The method of claim 1, further comprising:
establishing, in response to determining that the first network device generates a DHCP relay table entry, a local MAC-IP table entry based on the DHCP relay table entry, and issuing a forwarding MAC-IP table entry corresponding to the local MAC-IP table entry to hardware resources, the local MAC-IP table entry includes a first valid lifetime value of a first IP address;
sending a first MAC-IP notification message to a third network device to enable the third network device to establish a first remote MAC-IP table entry;
wherein, the first MAC-IP notification message includes a first sequence number and the first valid lifetime value, and the first remote MAC-IP table entry includes the first sequence number and the first valid lifetime value;
the first sequence number is a sum of 1 and a maximum sequence number in a remote MAC-IP table entry or remote MAC-IP table entries that matches/match the local MAC-IP table entry.

3. The method of claim 2, wherein after issuing a forwarding MAC-IP table entry corresponding to the local MAC-IP table entry to hardware resources, the method further comprises:
deleting, in response to determining that an access table entry that matches the local MAC-IP table entry is deleted, the forwarding MAC-IP table entry.

4. The method of claim 1, wherein before acquiring, in response to determining that a protocol connection between the first network device and the second network device is disconnected, a valid lifetime value included in each remote MAC-IP table entry, the method further comprises:
receiving a second MAC-IP notification message sent by the second network device, wherein the second MAC-IP notification message includes a second valid lifetime value of a second IP address and a second sequence number;
establishing a second remote MAC-IP table entry, which includes the second valid lifetime value and the second sequence number.

5. The method of claim 4, wherein the first network device includes a local MAC-IP table, the local MAC-IP table includes at least one local MAC-IP table entry;
after establishing the second remote MAC-IP table entry, the method further comprises:
receiving a first packet sent by a terminal, the first packet includes a MAC address and an IP address of the terminal;
in response to determining that there is no local MAC-IP table entry in the local MAC-IP table which matches the MAC address and the IP address of the terminal, and the MAC address and the IP address of the terminal match the second remote MAC-IP table entry, performing access detection on the terminal;
generating, in response to determining that an access response sent by the terminal is received, a synthetic MAC-IP table entry, which includes a port identifier, a VLAN identifier, the MAC address and the IP address of the terminal;
generating a forwarding MAC-IP table entry based on the synthetic MAC-IP table entry, the forwarding MAC-IP table entry comprises the MAC address and the IP address of the terminal;
issuing the forwarding MAC-IP table entry to hardware resources.

6. The method of claim 5, wherein after issuing the forwarding MAC-IP table entry to the hardware resources, the method further comprises:
deleting, in response to determining that an access table entry of the terminal is deleted, the synthetic MAC-IP table entry and the forwarding MAC-IP table entry.

7. The method of claim 4, wherein the first network device includes a local MAC-IP table, the local MAC-IP table includes a first local MAC-IP table entry, and the first local MAC-IP table entry includes a third sequence number; after establishing the second remote MAC-IP table entry, the method further comprises:
in response to determining that the second remote MAC-IP table entry matches the first local MAC-IP table entry, and the second sequence number is greater than the third sequence number, deleting the first local MAC-IP table entry, and deleting a DHCP relay table entry corresponding to the first local MAC-IP table entry.

8. The method of any one of claims 1-7, wherein the MAC-IP notification message sent by the first network device includes a first extended community attribute, and the first extended community attribute includes a valid lifetime value of an IP address.

9. The method of claim 8, wherein the MAC-IP notification message sent by the first network device further comprises a second extended community attribute, which comprises a sequence number of a MAC-IP table entry.

10. A method for security table entry maintenance, which is applied to a second network device, the second network device comprising a first remote MAC-IP table, the first remote MAC-IP table comprising at least one remote MAC-IP table entry notified by a fourth network device, wherein the method comprises:
acquiring, in response to determining that a protocol connection between the second network device and the fourth network device is disconnected, a valid lifetime value included in each remote MAC-IP table entry, wherein the valid lifetime value is used to indicate a valid lifetime of an IP address included in the remote MAC-IP table entry;
deleting, in response to determining that a duration during which the protocol connection is disconnected reaches the valid lifetime value, the at least one remote MAC-IP table entry.

11. The method of claim 10, wherein before acquiring, in response to determining that a protocol connection between the second network device and the fourth network device is disconnected, a valid lifetime value included in each remote MAC-IP table entry, the method further comprises:
receiving a first MAC-IP notification message sent by the fourth network device, wherein the first MAC-IP notification message comprises a first valid lifetime value of a first IP address and a first sequence number;
establishing a first remote MAC-IP table entry, which includes the first valid lifetime value and the first sequence number.

12. The method of claim 11, wherein the second network device further comprises at least one second remote MAC-IP table, the at least one second remote MAC-IP table comprises a second remote MAC-IP table entry, the second remote MAC-IP table entry matches the first remote MAC-IP table entry, and the second remote MAC-IP table entry comprises a second sequence number; after establishing the first remote MAC-IP table entry, the method further comprises:
sending, in response to determining that the first sequence number is greater than the second sequence number, a second MAC-IP notification message to other network devices other than the fourth network device, wherein the second MAC-IP notification message comprises the first valid lifetime value and the first sequence number.

13. The method of claim 10, wherein the second remote device further comprises at least one third remote MAC-IP table, each third remote MAC-IP table comprises at least one remote MAC-IP table entry; after deleting the at least one remote MAC-IP table entry, the method further comprises:
for each deleted remote MAC-IP table entry, in response to determining that there is no remote MAC-IP table entry in the at least one third remote MAC-IP table which matches this deleted remote MAC-IP table entry, sending a first MAC-IP revocation message to other network devices other than the fourth network device, wherein the first MAC-IP revocation message comprises a MAC address and an IP address in the remote MAC-IP table entry; or,
for each deleted remote MAC-IP table entry, in response to determining that there are remote MAC-IP table entries in the at least one third remote MAC-IP table that match this deleted remote MAC-IP table entry, selecting a third remote MAC-IP table entry with a highest sequence number from the matched remote MAC-IP table entries, wherein the third remote MAC-IP table entry comprises a second valid lifetime value and a third sequence number; and sending a third MAC-IP notification message to other network devices other than a fifth network device, wherein the third MAC-IP notification message comprises the second valid lifetime value and the third sequence number, and the fifth network device is a source device of the third remote MAC-IP table entry.

14. The method of any one of claims 10-13, wherein the MAC-IP notification message sent by the second network device comprises a first extended community attribute, and the first extended community attribute comprises a valid lifetime value of an IP address.

15. The method of claim 14, wherein the MAC-IP notification message sent by the second network device further comprises a second extended community attribute, which comprises a sequence number of a MAC-IP table entry.

16. An apparatus for security table entry maintenance, which is applied to a first network device, the first network device comprising a remote MAC-IP table, the remote MAC-IP table comprising at least one remote MAC-IP table entry notified by a second network device, wherein the apparatus comprises:
an acquisition module, to acquire, in response to determining that a protocol connection between the first network device and the second network device is disconnected, a valid lifetime value included in each remote MAC-IP table entry, the valid lifetime value is used to indicate a valid lifetime of an IP address included in the remote MAC-IP table entry;
a deletion module, to delete, in response to determining that a duration during which the protocol connection is disconnected reaches the valid lifetime value, the at least one remote MAC-IP table entry.

17. The apparatus of claim 16, further comprising:
an establishing module, to establish, in response to determining that the first network device generates a DHCP relay table entry, a local MAC-IP table entry based on the DHCP relay table entry, and issue a forwarding MAC-IP table entry corresponding to the local MAC-IP table entry to hardware resources, the local MAC-IP table entry includes a first valid lifetime value of a first IP address;
a sending module, to send a first MAC-IP notification message to a third network device to enable the third network device to establish a first remote MAC-IP table entry;
wherein, the first MAC-IP notification message includes a first sequence number and the first valid lifetime value, and the first remote MAC-IP table entry includes the first sequence number and the first valid lifetime value;
the first sequence number is a sum of 1 and a maximum sequence number in a remote MAC-IP table entry or remote MAC-IP table entries that matches/match the local MAC-IP table entry.

18. The apparatus of claim 17, wherein the deletion module is further to delete, in response to determining that an access table entry that matches the local MAC-IP table entry is deleted, the forwarding MAC-IP table entry.

19. The apparatus of claim 16, further comprising:
a receiving module, to receive a second MAC-IP notification message sent by the second network device, wherein the second MAC-IP notification message includes a second valid lifetime value of a second IP address and a second sequence number;
an establishing module, to establish a second remote MAC-IP table entry, which includes the second valid lifetime value and the second sequence number.

20. The apparatus of claim 19, wherein the first network device includes a local MAC-IP table, the local MAC-IP table includes at least one local MAC-IP table entry;
the apparatus further includes a detection module, a generation module and an issuing module;
the receiving module is further to receive a first packet sent by a terminal, the first packet includes a MAC address and an IP address of the terminal;
the detection module is to perform access detection on the terminal, in response to determining that there is no local MAC-IP table entry in the local MAC-IP table which matches the MAC address and the IP address of the terminal, and the MAC address and the IP address of the terminal match the second remote MAC-IP table entry;
the generation module is to generate, in response to determining that an access response sent by the terminal is received, a synthetic MAC-IP table entry, which includes a port identifier, a VLAN identifier, the MAC address and the IP address of the terminal;
the generation module is further to generate a forwarding MAC-IP table entry based on the synthetic MAC-IP table entry, wherein the forwarding MAC-IP table entry includes the MAC address and the IP address of the terminal;
the issuing module is to issue the forwarding MAC-IP table entry to hardware resources.

21. The apparatus of claim 20, wherein
the deletion module, is further to delete, in response to determining that an access table entry of the terminal is deleted, the synthetic MAC-IP table entry and the forwarding MAC-IP table entry.

22. The apparatus of claim 19, wherein the first network device includes a local MAC-IP table, the local MAC-IP table includes a first local MAC-IP entry, the first local MAC-IP entry includes a third sequence number;
the deletion module is further to delete, in response to determining that the second remote MAC-IP table entry matches the first local MAC-IP table entry and the second sequence number is greater than the third sequence number, the first local MAC-IP table entry, and delete a DHCP relay table entry corresponding to the first local MAC-IP table entry.

23. The apparatus of any one of claims 16-22, wherein the MAC-IP notification message sent by the first network device includes a first extended community attribute, and the first extended community attribute includes a valid lifetime value of an IP address.

24. The apparatus of claim 23, wherein the MAC-IP notification message sent by the first network device further includes a second extended community attribute, which includes a sequence number of a MAC-IP table entry.

25. An apparatus for security table entry maintenance, which is applied to a second network device, the second network device including a first remote MAC-IP table, the first remote MAC-IP table including at least one remote MAC-IP table entry notified by a fourth network device, wherein the apparatus comprises:
an acquisition module, to acquire, in response to determining that a protocol connection between the second network device and the fourth network device is disconnected, a valid lifetime value included in each remote MAC-IP table entry, the valid lifetime value is used to indicate a valid lifetime of an IP address included in the remote MAC-IP table entry;
a deletion module, to delete, in response to determining that a duration during which the protocol connection is disconnected reaches the valid lifetime value, the at least one remote MAC-IP table entry.

26. The apparatus of claim 25, further comprising:
a receiving module, to receive a first MAC-IP notification message sent by the fourth network device, wherein the first MAC-IP notification message includes a first valid lifetime value of a first IP address and a first sequence number;
an establishing module, to establish a first remote MAC-IP table entry, which includes the first valid lifetime value and the first sequence number.

27. The apparatus of claim 26, wherein the second network device further includes at least one second remote MAC-IP table, the at least one second remote MAC-IP table includes a second remote MAC-IP table entry, the second remote MAC-IP table entry matches the first remote MAC-IP table entry, and the second remote MAC-IP table entry includes a second sequence number; the apparatus further comprises:
a sending module, to send, in response to determining that the first sequence number is greater than the second sequence number, a second MAC-IP notification message to other network devices other than the fourth network device, and the second MAC-IP notification message includes the first valid lifetime value and the first sequence number.

28. The apparatus of claim 25, wherein the second remote device further includes at least one third remote MAC-IP table, each third remote MAC-IP table includes at least one remote MAC-IP table entry; the apparatus further comprises a sending module;
the sending module is to:
for each deleted remote MAC-IP table entry, in response to determining that there is no remote MAC-IP table entry in the at least one third remote MAC-IP table which matches this deleted remote MAC-IP table entry, send a first MAC-IP revocation message to other network devices other than the fourth network device, wherein the first MAC-IP revocation message includes a MAC address and an IP address in the remote MAC-IP table entry; or,
for each deleted remote MAC-IP table entry, in response to determining that there are remote MAC-IP table entries in the at least one third remote MAC-IP table which match this deleted remote MAC-IP table entry, select a third remote MAC-IP table entry with a highest sequence number from the matched remote MAC-IP table entries, wherein the third remote MAC-IP table entry includes a second valid lifetime value and a third sequence number; send a third MAC-IP notification message to other network devices other than a fifth network device, wherein the third MAC-IP notification message includes the second valid lifetime value and the third sequence number, and the fifth network device is a source device of the third remote MAC-IP table entry.

29. The apparatus of any one of claims 25-28, wherein the MAC-IP notification message sent by the second network device includes a first extended community attribute, and the first extended community attribute includes a valid lifetime value of an IP address.

30. The apparatus of claim 29, wherein the MAC-IP notification message sent by the second network device further includes a second extended community attribute, which includes a sequence number of a MAC-IP table entry.

31. A first network device, wherein the first network device includes a remote MAC-IP table, the remote MAC-IP table includes at least one remote MAC-IP table entry notified by a second network device, and the first network device comprises:
a processor;
a transceiver;
a machine storage medium having stored therein machine executable instructions which, when being executed by the processor, cause the processor to perform the following operations:
acquiring, in response to determining that a protocol connection between the first network device and the second network device is disconnected, a valid lifetime value included in each remote MAC-IP table entry, the valid lifetime value is used to indicate a valid lifetime of an IP address included in the remote MAC-IP table entry;
deleting, in response to determining that a duration during which the protocol connection is disconnected reaches the valid lifetime value, the at least one remote MAC-IP table entry.

32. The first network device of claim 31, wherein the machine executable instructions further cause the processor to perform the following operations:
establishing, in response to determining that the first network device generates a DHCP relay table entry, a local MAC-IP table entry based on the DHCP relay table entry, and issuing a forwarding MAC-IP table entry corresponding to the local MAC-IP table entry to hardware resources, the local MAC-IP table entry includes a first valid lifetime value of a first IP address;
sending via the transceiver, a first MAC-IP notification message to a third network device to enable the third network device to establish a first remote MAC-IP table entry;
wherein, the first MAC-IP notification message includes a first sequence number and the first valid lifetime value, and the first remote MAC-IP table entry includes the first sequence number and the first valid lifetime value;
the first sequence number is a sum of 1 and a maximum sequence number in a remote MAC-IP table entry or remote MAC-IP table entries that matches/match the local MAC-IP table entry.

33. The first network device of claim 32, wherein the machine executable instructions further cause the processor to perform the following operation:
deleting, in response to determining that an access table entry that matches the local MAC-IP table entry is deleted, the forwarding MAC-IP table entry.

34. The first network device of claim 31, wherein the machine executable instructions further cause the processor to perform the following operations:
receiving via the transceiver, a second MAC-IP notification message sent by the second network device, the second MAC-IP notification message includes a second valid lifetime value of a second IP address and a second sequence number;
establishing a second remote MAC-IP table entry, which includes the second valid lifetime value and the second sequence number.

35. The first network device of claim 34, wherein the first network device includes a local MAC-IP table, the local MAC-IP table includes at least one local MAC-IP table entry;
the machine executable instructions cause the processor to perform the following operations:
receiving via the transceiver, a first packet sent by a terminal, the first packet includes a MAC address and an IP address of the terminal;
in response to determining that there is no local MAC-IP table entry in the local MAC-IP table which matches the MAC address and IP address of the terminal, and the MAC address and IP address of the terminal match the second remote MAC-IP table entry, performing access detection on the terminal;
generating, in response to determining that an access response sent by the terminal is received, a synthetic MAC-IP table entry, which includes a port identifier, a VLAN identifier, the MAC address and the IP address of the terminal;
generating a forwarding MAC-IP table entry based on the synthetic MAC-IP table entry, the forwarding MAC-IP table entry includes the MAC address and IP address of the terminal;
issuing the forwarding MAC-IP table entry to hardware resources.

36. The first network device of claim 35, wherein the machine executable instructions further cause the processor to perform the following operations:
deleting, in response to determining that an access table entry of the terminal is deleted, the synthetic MAC-IP table entry and the forwarding MAC-IP table entry.

37. The first network device of claim 34, wherein the first network device includes a local MAC-IP table, the local MAC-IP table includes a first local MAC-IP table entry, and the first local MAC-IP table entry includes a third sequence number; the machine executable instructions further cause the processor to perform the following operations:
in response to determining that the second remote MAC-IP table entry matches the first local MAC-IP table entry, and the second sequence number is greater than the third sequence number, deleting the first local MAC-IP table entry, and deleting a DHCP relay table entry corresponding to the first local MAC-IP table entry.

38. The first network device of claims 31-37, wherein the MAC-IP notification message sent by the first network device includes a first extended community attribute, and the first extended community attribute includes a valid lifetime value of an IP address.

39. The first network device of claim 38, wherein the MAC-IP notification message sent by the first network device further includes a second extended community attribute, which includes a sequence number of a MAC-IP table entry.

40. A second network device, wherein the second network device includes a first remote MAC-IP table, the first remote MAC-IP table includes at least one remote MAC-IP table entry notified by a fourth network device, and the second network device comprises:
a processor;
a transceiver;
a machine storage medium having stored therein machine executable instructions which, when being executed by the processor, cause the processor to perform the following operations:
acquiring, in response to determining that a protocol connection between the second network device and the fourth network device is disconnected, a valid lifetime value included in each remote MAC-IP table entry, the valid lifetime value is used to indicate a valid lifetime of an IP address included in the remote MAC-IP table entry;
deleting, in response to determining that a duration during which the protocol connection is disconnected reaches the valid lifetime value, the at least one remote MAC-IP table entry.

41. The second network device of claim 40, wherein the machine executable instructions further cause the processor to perform the following operations:
receiving via the transceiver, a first MAC-IP notification message sent by the fourth network device, wherein the first MAC-IP notification message includes a first valid lifetime value of a first IP address and a first sequence number;
establishing a first remote MAC-IP table entry, which includes the first valid lifetime value and the first sequence number.

42. The second device of claim 41, wherein the second network device further includes at least one second remote MAC-IP table, the at least one second remote MAC-IP table includes a second remote MAC-IP table entry, the second remote MAC-IP table entry matches the first remote MAC-IP table entry, and the second remote MAC-IP table entry includes a second sequence number; the machine executable instructions cause the processor to perform the following operation:
sending, in response to determining that the first sequence number is greater than the second sequence number, a second MAC-IP notification message to other network devices other than the fourth network device, and the second MAC-IP notification message includes the first valid lifetime value and the first sequence number.

43. The second device of claim 40, wherein the second remote device further includes at least one third remote MAC-IP table, each third remote MAC-IP table includes at least one remote MAC-IP table entry; the machine executable instructions cause the processor to perform the following operations:
for each deleted remote MAC-IP table entry, in response to determining that there is no remote MAC-IP table entry in the at least one third remote MAC-IP table which matches this deleted remote MAC-IP table entry, sending a first MAC-IP revocation message to other network devices other than the fourth network device, the first MAC-IP revocation message includes a MAC address and an IP address in the remote MAC-IP table entry; or,
for each deleted remote MAC-IP table entry, in response to determining that there are remote MAC-IP table entries in the at least one third remote MAC-IP table which match this deleted remote MAC-IP table entry, selecting a third remote MAC-IP table entry with a highest sequence number from the matched remote MAC-IP table entries, the third remote MAC-IP table entry includes a second valid lifetime value and a third sequence number; sending a third MAC-IP notification message to other network devices other than a fifth network device, the third MAC-IP notification message includes the second valid lifetime value and the third sequence number, and the fifth network device is a source device of the third remote MAC-IP table entry.

44. The second network device of any one of claims 40-43, wherein the MAC-IP notification message sent by the second network device includes a first extended community attribute, and the first extended community attribute includes a valid lifetime value of an IP address.

45. The second network device of claim 44, wherein the MAC-IP notification message sent by the second network device further includes a second extended community attribute, which includes a sequence number of a MAC-IP table entry.

46. A machine readable storage medium having stored therein machine executable instructions that, when invoked and executed by a processor, cause the processor to perform the method of any one of claims 1-9 or 10-15.

47. A computer program product, which causes a processor to perform the method of any one of claims 1-9 or 10-15.
